(19)

Europäisches
Patentamt
European
Patent Office
Office européen
des brevets

(11) **EP 2 314 989 B1**

(12) **EUROPEAN PATENT SPECIFICATION**

(45) Date of publication and mention
of the grant of the patent:
**29.08.2012 Bulletin 2012/35**

(51) Int Cl.:
***G01D 5/244*** (2006.01)   ***G01D 5/36*** (2006.01)

(21) Application number: **09173831.0**

(22) Date of filing: **22.10.2009**

(54) **An encoder pattern with matching aperture pattern, a method for designing said encoder pattern, and an optical shaft encoder in which the encoder pattern and aperture pattern are implemented**

Codierungsmuster mit passendem Öffnungsmuster, Verfahren zur Gestaltung des Codiermusters und optischer Bolzencodierer, in dem das Codiermuster und das Öffnungsmuster umgesetzt sind

Motif d'encodeur avec motif d'ouverture correspondant, procédé de conception de ce motif d'encodeur, et encodeur de tige optique dans lequel le motif d'encodeur et motif d'ouverture sont implémentés

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**27.04.2011 Bulletin 2011/17**

(73) Proprietor: **Imperial Ltd.**
**Mongkok, Kowloon, Hong Kong (CN)**

(72) Inventors:
• **Hahne, Eckhard**
 **4050 Skibby (DK)**

• **Nielsen, Claus**
 **3230 Græsted (DK)**
• **Jørgensen, Kell**
 **3390 Hundested (DK)**

(74) Representative: **Holme, Edvard**
**Holme Patent A/S**
**Vesterbrogade 20**
**1620 Copenhagen V. (DK)**

(56) References cited:
**EP-A1- 0 202 194**

**Description**

The present invention relates to an encoder pattern of the kind comprising at least two encoder tracks of alternating optically distinguishable fields periodically arranged with a period $P_x$ and an area $A_x$ of the optically distinguishable fields. Said encoder pattern, when implemented in an encoder configured for measuring movement and/or speed and/or position of an object, is moved relatively to an aperture pattern and gives rise to a varying encoder output signal. The encoder track with the longest period is defined as a base-track having a base-period $P_1$, and all other tracks have a period $P_2 ...P_n$. Each of the at least two encoder tracks of the encoder pattern has a corresponding aperture track, the period of an encoder track is the same as the period of a corresponding aperture track, each of the at least two encoder tracks together with the corresponding aperture tracks gives rise to a harmonic signal and the at least two harmonic signals can be combined to form at least one sinusoidal encoder output signal where $P_2=(1/3)*P_1$, $P_3=(1/5)*P_1$,....,$P_n=(1/(2n-1))*P_1$.

Optical encoders have been widely used for decades, and the technical field features a variety of different types. They are in general used to monitor movement or position and can be found in well-known objects as printers, photocopiers and gasoline pumps. The urge to achieve a certain shape of the output signal from an optical encoder is well known. An analog optical encoder capable of outputting a triangular signal is disclosed in US patent no. 4,795,901. It is an objective of the technique revealed in this patent document to avoid an approximate trapezoidal output wave signal. The trapezoidal wave signal is stated to be unwanted due to the fact that it is only linear on a limited (60%) range on the curve. The triangular signal is obtained by having two sets of fixed slits, opposed to former one set, and the two sets are phase shifted by 90° with respect to each other. This way two trapezoidal wave signals, one from each set of fixed slits, are superimposed thus creating a triangular signal. Whereas it in US 4,795,901 is stated that the triangular signal is attractive for several reasons, it in practice has significant disadvantages as the output signal is discontinuous and consists of straight parts and thus is unattractive in the scope of data analysis and data representation.

Other types of optical encoders are constructed to produce a sinusoidal signal, one such apparatus is disclosed in US patent application no. 2007/0120049. In the apparatus disclosed in US 2007/0120049 the sinusoidal character of the light signal is achieved by using either an optical sensor with a diamond shape or a modified diamond shape, or an encoder pattern where the optically distinguishable elements are shaped as one of: a diamond shape, a modified diamond shape or an hourglass shape. This has the effect of creating the sinusoidal signals, but an obvious downside is the rather complicated shapes of the optical sensor /encoder pattern. This results among other things in limitations on the precision and on the information density it is possible to create on the encoder disk. This of course is a major problem when wanting to create small encoders and when there is a need for very detailed measurements.

From US patent no. 5,889,280 is known a displacement measuring apparatus with an output signal with only a small harmonic distortion. The apparatus of US patent no. 5,889,280 comprises a first member with a first grating and a second member with a second grating each containing light transmitting and light non-transmitting portions. The pitch and the width of the light transmitting and light non-transmitting portions in the gratings are set to fixed values leading to the desired output signal. Whereas this design can function under the premises given in the description of US 5,889,280, there are only little or no options for further corrections to the output signal. This is disadvantageous if there should occur a need for more precise readings, as well as this way of constructing the pattern requires a lot of re-designing if the pattern should be implemented in other types of encoders.

Existing techniques provide signals with an error around <1%, which is too much to be defined as high precision and puts substantial restrictions on the possibilities for the use of said existing techniques.

Thus there is a need for reliable, high-precision optical encoders, which can be industrially prepared in large as well as in small scale and can be easily modified to achieve a higher precision, and which can be configured to provide extremely precise and fast measurements.

In a first aspect according to the present invention is provided an optical encoder facilitating a very high precision.

In a second aspect according to the present invention is provided an optical encoder facilitating a precision, which easily can be adjusted to be higher or lower.

In a third aspect according to the present invention is provided an optical encoder with patterns, which can be manufactured with small and few errors, both in small and large scale.

In a fourth aspect according to the present invention is provided a very versatile encoder pattern, which can be implemented in a variety of encoders as for example linear encoders and shaft encoders.

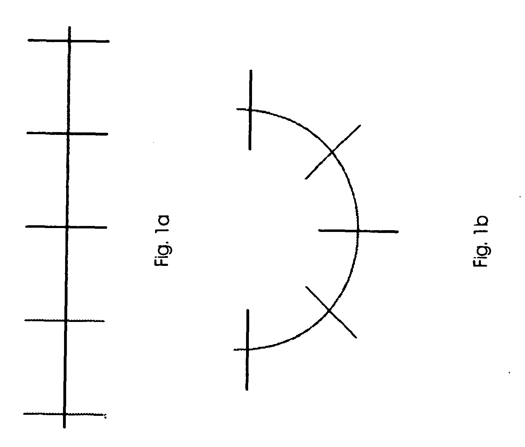

Within the scope of the present patent application the term "to map" or "mapping" is used for the process of transferring a linear pattern onto a disc and vice versa. Figs. 1a and 1b illustrate the meaning of mapping. Fig. 1a is a linear pattern with a horizontal main line intersected by five equidistant parallel short lines. The short lines are perpendicular to the main line. In fig. 1b the linear pattern of fig. 1a has been mapped onto a disc resulting in a pattern with a main line being a section of a circle intercepted by five equidistant short lines. The short lines are no longer parallel but are radiating as spokes in a wheel and if they were extended in the inwards direction, they would all meet in the "centre".

The novel and unique features of the present invention is that the areas $A_x$ of the alternating optically distinguishable fields can be given by the expression $A_2=(1/9) *A_1$, $A_3 = (1/25) *A_1,..., A_n = (1/ (2n-1)^2) *A_1$.

By using this expression it is possible to design an encoder pattern with matching aperture pattern, which when implemented in an encoder leads to at least one sinusoidal encoder output signal. The period of an encoder track with matching aperture track governs the period of the harmonic signal to which it gives rise. Thus by selecting the periods of the encoder tracks the periods of the harmonic signals can be chosen specifically to obtain a certain encoder output signal, in the present case at least one sinusoidal encoder output signal. An existing encoder pattern, obtained by the above expression, can be further developed, if e.g. a more precise encoder is in demand, by simply adding yet another track with a period given by $P_n=(1/(2n-1))*P_1$ to the pattern. Thus it is simple to add further tracks and hereby increase the precision/resolution of the encoder in which the patterns are implemented. This possibility for increasing the resolution without having to go through lengthy calculations and development, offers a major advantage over traditional pattern designs as they often requires elaborate calculations resulting in complex patterns, which are very hard, if possible at all, to optimize if a better resolution of the encoder in which they are implemented in is required.

When separating out the tracks giving rise to each of the harmonic signals as they are in the present pattern design, it greatly enhances the possibility of manipulating the form of each of said harmonic signals as each of the encoder tracks with corresponding aperture tracks is easy to adjust. Furthermore, when the tracks are arranged this way, it is possible to position the tracks with great precision and to shape the optically distinguishable fields accurately. This high precision design allows for a very high precision of the encoder, as it enables a very accurate shaping of the encoder output signal. Unlike other encoder pattern designs the present pattern design allows for the implementation in various different types of encoders in small and large scale.

The at least two harmonic signals can be combined to form at least one sinusoidal encoder output signal either in the encoder or by later data processing.

The encoder in which the encoder pattern is implemented can be configured for measuring movement and/or speed and/or position of an object. Such an object can be a movable part in a physical entity, for example a rotating shaft in an engine.

The areas $A_x$ of the alternating optically distinguishable fields can be given by the expression $A_2=(1/9) *A_1$, $A_{3=}(1/25)*A_1,..., A_n=(1/ (2n-1)^2) *A_1$. As the areas of the alternating optically distinguishable fields in the tracks determines the amplitude of the harmonic signal stemming from each track when the encoder is operated, it can be an advantages to adjust the areas of the alternating optically distinguishable fields in order to obtain specific harmonic signals. This way, by using the above expression for $A_n$, each track is designed so that all of the harmonic signals can be combined to obtain an encoder output signal with a specially designed shape.

Such a special and advantageous shape of the encoder output signal can be a sine and/or cosine, as they are mathematically well known shapes, continuous, harmonic and differentiable and thus these sine/cosine signals allows for a liberty of action when it comes to processing, reading and presentation of data.

The at least two tracks of the encoder pattern may advantageously be arranged in pairs wherein the encoder tracks have the same period, and the encoder pattern may comprise n encoder track- pairs with periods $P_1.... P_n$ and areas $A_1.... A_n$ of the optically distinguishable fields.

By having pairs of tracks with the same period and area, pairs of harmonic signals with the same period and amplitude can be obtained. This is an advantage as having two signals with same parameters provides more room for analysis of the harmonic signals.

When adding a track or track pair to the pattern the precision of the encoder output signal is improved, i.e. the sinusoidal encoder output signal preferably becomes smoother and closer to a perfect sine or cosine. When the output from the encoder is at least one curve, which is a very good approximation to a sine, and/or cosine curve it is possible to implement the encoder in objects, which needs very precise and fast measurements, such as e.g. advanced optical equipment.

With three track pairs in the encoder pattern and matching aperture pattern designed from the above formulas, measurements have shown that the error (of the sinusoidal encoder output signal compared to an ideal sinusoidal encoder output signal e.g. a perfect sine) on the overall encoder is less than 0.5% and even down to 0.1%. This error can be taken even lower if more tracks are added.

Advantageously the aperture pattern may comprise a center aperture track-pair. The aperture pattern may further comprise a center axis situated between the two tracks of the center track pair, defining a first aperture section and an second aperture section of the aperture pattern to provide an overall aperture pattern which is simple and easily overviewed which is an advantage when for example the pattern needs to be implemented under new conditions, or needs to be adjusted to allow for a better precision of the encoder in which it is implemented. Better precision can for example be required for encoders used in petrol stands, as the rising petrol prices makes it meaningful to be able to measure the pumped petrol with an extra significant figure, or in the development of new telescopes capable of higher magnification.

The periods of the tracks of the second aperture section can be shifted by $P_1/2$ with respect to the first aperture section of the aperture pattern. By doing so the harmonic signals from the tracks of the first section of the aperture pattern are shifted by $P_1/2$ with respect to the harmonic signals from the tracks of the second section of the aperture pattern. By means of an appropriate detector choice it is possible to obtain multiple non-identical harmonic signals, which can be added, subtracted and/or multiplied in any combination in order to achieve the best possible encoder output signal. The detector is a photodetector, typically an optical detector.

Preferably the encoder pattern is furthermore designed from a mathematical expression expressing a sine or cosine as a sum of harmonic functions where

- the mathematical expression is $f(x) = a_1 \cdot ft_1(x) + a_2 \cdot ft_2(x) + a_3 \cdot ft_3(x) + .... + a_n \cdot ft_n(x)$ ; wherein $a_1, a_2, ..., a_n$ are the amplitudes, $ft_1, ft_2, ..., ft_n$ are triangle functions with periods $p_1, p_2, ..., p_n$ and n is the number of track-pairs in the encoder pattern or
- the mathematical expression $F = F_1 + F_3/9 - F_5/25 + F_7/49 - ... + (-1)^n(F_{2n-1})/(2n-1)^2)$; wherein $F_n$ is a harmonic function with the period $p_n$ and amplitude $1/(2n-1)^2 = a_n$.

When the mathematical expression is $f(x) = a_1 \cdot ft_1(x) + a_2 \cdot ft_2(x) + a_3 \cdot ft_3(x) + .... + a_n \cdot ft_n(x)$; where $a_1, a_2, ..., a_n$ are the amplitudes, $ft_1, ft_2, ..., ft_n$ are triangle functions with periods $p_1, p_2, ..., p_n$ and n is the number of track-pairs in the encoder pattern, it is possible to deduct the relevant periods (which corresponds to the periods described earlier given by $P_n = (1/(2n-1)) \cdot P_1$) and, corresponding amplitudes needed to achieve an optimal sinusoidal encoder output signal.

Alternatively the mathematical expression may be $F = F_1 + F_3/9 - F_5/25 + F_7/49 - ... + (-1)n \cdot (F_{2n-1}/(2n-1)^2)$ where F is a sine function, $F_n$ is a harmonic function with the period $p_n$ and amplitude $a_n = 1/(2n-1)^2$. This expression has in practice been demonstrated by the inventors of the present patent application to give a good sinusoidal encoder output signal. The functions $F_1, ..., F_n$ are approximate triangular functions with period $1, ..., 1/n$ times the period of $F_1$. This expression turned out to be consistent with the first mentioned mathematical expression. The amplitudes and periods of the harmonic signals can be the same in both expressions and thus pattern design achieved on the basis of both expressions may have the same size of the optically distinguishable fields, and the periods of the tracks may also be the same or substantially the same.

Using the above, very advanced considerations regarding the design of the encoder pattern can be put into practice my means of simple expressions resulting in an extremely versatile pattern design.

The encoder and aperture pattern may be either linear, in which case the encoder tracks and aperture tracks are parallel tracks above each other, or can be circular, in which case the encoder tracks and aperture tracks are concentric circles or concentric sections of circles. The fact that the same pattern can be mapped onto a linear or a circular object with only trivial modifications is yet another example of how versatile the present pattern design is. It is a huge advantage that the basic calculations behind the patterns are so easily applied to the design, which result in that the manufacturing process is fast, accurate and inexpensive, as well as modifications to the design is correspondingly easy implemented. The encoder and matching aperture patterns according to the present invention can be implemented in very small optical encoder but can also be implemented in large-scale structures requiring an extremely high precision. Such large scare structures can be radars or space telescopes, where the encoder pattern can be transferred to a disc with a radius of 0.5 meters or even up to 1 meter of higher if needed. When the encoder pattern, with its matching aperture pattern, is manufactured in this large scale many tracks can be implemented and the precision and thus the resolution, which can be achieved on measurements, is extremely high. Should the selected precision and resolution turn out not to provide the intended performance additional tracks can with minimum efforts be added by just adding one or more additional terms to the formulas, i.e. increasing n by an integer, thereby enhancing precision and resolution. The number of additional required terms can be made by iteration or by way of experience, e.g. nomograms or tables.

The encoder and matching aperture pattern can be implemented in a shaft encoder. Shaft encoders are widely used in a great variety of technologies and thus it is beneficial to work with patterns, which can be applied in encoders of this type.

The optically distinguishable elements may be alternating opaque and transparent fields. Such patterns are simple to achieve by known techniques and can thus be used with great advantage. For example the patterns can be manufactured by masking of the design on a glass disc and vapor depositing a metal layer onto the glass disc. When the masking is removed a pattern is created where the transparent fields are glass and the opaque fields are metal film.

The optically distinguishable elements may be made as alternating solid material or solid elements and through holes. Such patterns are also simple to achieve by known techniques and can thus be used advantageoulsy and with low costs.

The invention further relates to a method for designing an encoder pattern, which method comprises the steps of

a. providing a base encoder track or encoder track-pair with a period $P_1$ and an area $A_1$ of the optically distinguishable elements,

b. providing an additional encoder track or encoder track-pair to the encoder pattern with period $P_2 = (1/3) \cdot P_1$, $P_3 = (1/5) \cdot P_1, ..., P_n = (1/(2n-1)) \cdot P_1$, and

c. repeating step b until the required or acceptable precision is achieved.

By use of this method an encoder pattern with matching aperture pattern can be designed in order to obtain a desired resolution of the encoder output signal and precision of the encoder in which the encoder and aperture pattern are implemented. No elaborate calculations are needed, when e.g. demands are for an encoder with even higher resolution. Instead it is by means of the present invention possible to follow the above simple equation and method.

Furthermore, the method can comprise that the areas $A_x$ of the optically distinguishable elements are determined as described above i.e. by either $A_n=(1/(2n-1)^2) *A_1$, $f(x)=a_1*ft_1(x) + a_2*ft_2(x) + a_3*ft_3(x) +....+ a_n*ft_n(x)$; or $F = F_1 + F_3/9 - F_5/25 + F_7/49-...+ (-1)n*(F_{2n-1}/(2n-1)^2)$.

As described earlier, to control the areas of the optically distinguishable elements, is to control the amplitudes of the harmonic signals from the tracks in the encoder pattern. As all of the harmonic signals are combined to obtain the actual encoder output signal, it is thus possible to control the shape of the encoder output signal.

In some situations it can be advantageous to, after any of the method steps above, analyze the encoder output signal, preferably by means of Fourier analysis, and adjusting the area of the optically distinguishable elements based on the result of the Fourier analysis. This enables the design of encoder and aperture pattern, which leads to the exact desired shape of the encoder output signal wanted in a given situation.

This way a simple but yet very versatile encoder pattern is obtained. The design of the encoder and aperture patterns according to the present invention allows for a very precise alignment and shaping of the encoder and aperture tracks. It also enables the addition of extra encoder tracks, with corresponding aperture tracks, which adds extra harmonic signals to the output. Depending on the size of the encoder and thus the size of the tracks with the optically distinguishable fields, certain optical effects might play a role on the shape of all or some of the harmonic signals. This does not change the effect fullness of the overall design of the encoder, but it can be advantageous to analyze the encoder output signal and to adjust the encoder and aperture patterns on the basis of said analysis in order to have maximum quality of the encoder output.

The invention will be described by way of example below with reference to the drawing illustrating various embodiments and combinations of encoder and aperture patterns.

Fig. 1a and 1b illustrate the definition of mapping,

Figs. 2a and 2b show an exemplary embodiment of an encoder pattern with matching aperture pattern, respectively, according to the invention,

Figs. 3a and 3b show an alternative embodiment of an encoder pattern with matching aperture pattern, respectively, according to the invention,

Fig. 4 shows another exemplary embodiment of an aperture pattern according to the invention,

Fig. 5 shows yet another exemplary embodiment of an aperture pattern according to the invention,

Fig. 6 shows yet another exemplary embodiment of an aperture pattern according to the invention,

Figs. 7a and 7b shows an example of a possible embodiment of a circular encoder pattern according to the invention with matching aperture pattern,

Fig. 8 is an exploded perspective view of a shaft encoder with an encoder pattern and aperture pattern according to the invention implemented,

Fig. 9 shows the shaft encoder of fig. 8 in an assembled state,

Fig. 10 is a sectional view taken along line X-X of the shaft encoder seen in fig. 9, and

Fig. 11 is an exemplary configuration of the detector implemented in the shaft encoder of figs. 8-10.

It should be recognised that the figures are given for illustrative purposes and that the areas of the bright fields 7a, 7b, 7c and dark fields 8a, 8b, 8c are not actual size. However the periods $P_a$, $P_b$, $P_c$ as well as the vertical relative positions of the tracks of both encoder patterns and aperture patterns are correct.

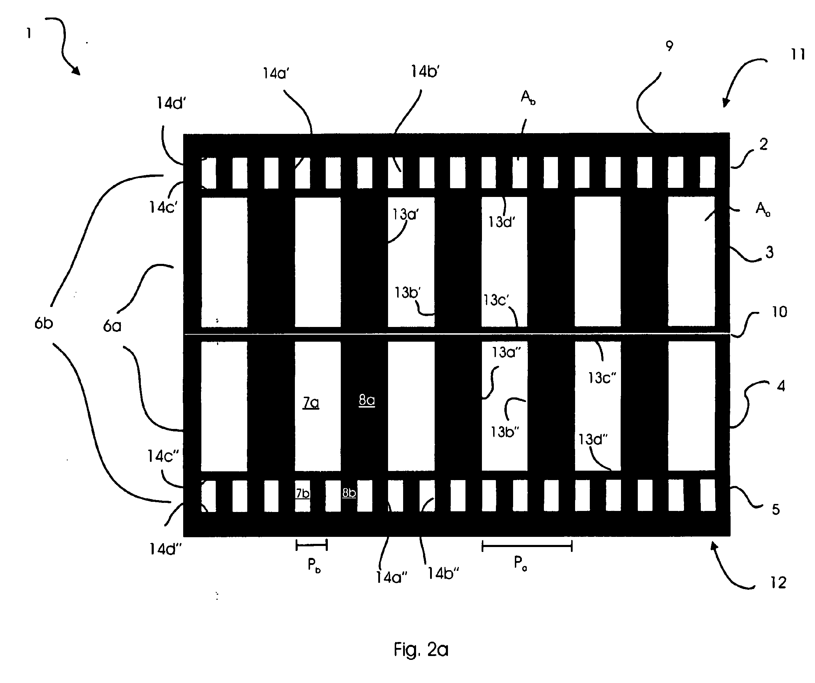

Fig. 2a is an exemplary embodiment of a linear encoder pattern 1. The encoder pattern 1 comprises four tracks 2-5 of equal length arranged above each other with a first track 2 above a second track 3, which second track 3 is above a third track 4, which third track is above a fourth track 5 using the orientation of fig. 2a. All tracks 2-5 are parallel to each other. The second track 3 and the third track 4 are alike forming a first track pair 6a and the first track 2 and the fourth track 5 are alike forming a second track pair 6b. Each track consists of alternating bright fields 7a, 7b and dark fields 8a, 8b. The bright fields 7a and dark fields 8a of the first track pair 6a are all of equal area $A_a$ and dimensions, and similarly all bright fields 7b and dark fields 8b of the second track pair 6b are of equal area $A_b$ and dimensions. The bright fields 7b and dark fields 8b of the second track pair 6b are smaller than the bright fields 7a and dark fields 8a of the first track pair 6a.

All tracks 2-5 begins with a bright field 7a, 7b, and the background 9 of the encoder pattern is dark.

The encoder pattern 1 further comprises a centre axis 10, dividing the encoder pattern into a first encoder section 11 and a second encoder section 12. In the present example the centre axis 10 is a mirror axis and thus the second encoder section 12 is a mirror image of the first encoder section 11. The centre axis 10 is situated in the middle between the two tracks of the first track pair 6a.

The four tracks 2-5 of the encoder pattern 1 and the centre axis 10 can be extended optionally long, left and right of the pattern section shown in fig. 2a.

Each bright field 7a or dark field 8a of the second track 3, i.e. the track of the first encoder section 11 of the encoder pattern 1 closest to the centre axis 10, is rectangular with a first long side 13a' opposite a second long side 13b' both extending perpendicular to the centre axis 10. The first long side 13a' and the second long side 13b' are, at each their end closest to the centre axis 10, connected by a first short side 13c' and are, at the end furthest away from the centre axis 10, connected by a second short side 13d'. The first long side 13a' and second long side 13b' side are longer than the first short side 13c' and second short side 13d'. The dimensions of the bright fields 7a are equal to the corresponding dimensions of the dark fields 8a.

Similarly are the bright field 7b or dark field 8b of the first track 2, i.e. the track of the first encoder section 11 furthest away from the centre axis 10, rectangular with a first long side 14a' opposite a second long side 14b' both extending perpendicular to the centre axis 10. The first and second long side are, at each their end closest to the centre axis 10, connected by a first short side 14c' and at the end furthest away from the centre axis they are connected by a second short side 14d'. The first long side 14a' and second long side 14b' side are longer than the first short side 14c' and second short side 14d'. The dimensions of the bright fields 7b are equal to the corresponding dimensions of the dark fields 8b.

The dimensions of the bright fields 7a, 7b and dark fields 8a, 8b of the first track 2 and second track 3, respectively, of the encoder pattern 1 are designed so that one second short side 13d' of a bright field 7a in the second track 3 faces three first short sides 14c' of fields in the first row 2, more precisely it faces two first short sides 14c' of bright fields 7b and one first short side 14c' of a dark field 8b.

The second section 12 containing the third track 4 and the fourth track 5 is a mirror image of the first section 11, and for like parts like reference numerals are used. The definitions and numbering of the sides of the bright fields 7a, 7b and dark fields 8a, 8b are reused with the only difference that they are marked with " i.e. the long sides of the fields of the third row 4 are 13a " and 13b ", and the short sides are 13c" and 13d", 13c" being the short side facing the centre axis 10. Similarly are the long sides of the bright fields 7b and dark fields 8b marked 14a" and 14b" and the short sides 14c" and 14d", 14d" being the short side facing away from the centre axis 10.

The bright fields 7a and dark fields 8a of the first track pair 6a are arranged in a periodic manner with a period $P_a$. The period $P_a$ of the first track pair 6a is named the base period. The tracks and the track pair with the period $P_a$ is the base-track/base-track pair. The period $P_a$ is two times the length of the first short side 13c'.

The bright fields 7b and dark fields 8b of the second track pair 6b are arranged in a periodic pattern with a period $P_b$. The period $P_b$ of the second track pair 6b period is 1/3 of the period $P_a$ of the first track pair 6a.

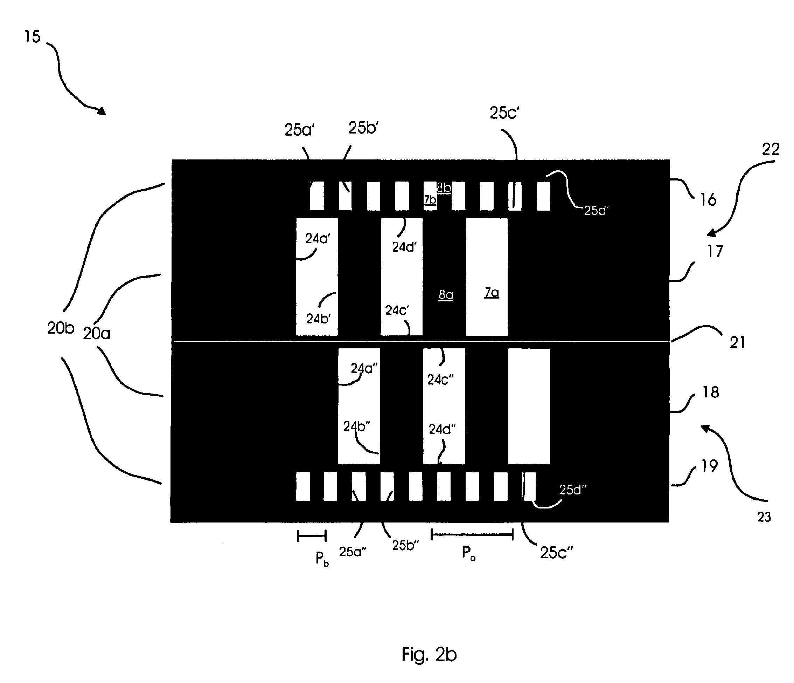

Fig. 2b is an exemplary embodiment of an aperture pattern 15 for use together with an encoder pattern of the type shown in fig. 2a. Several components are also found in fig. 2a and for like parts like reference numerals are used.

The aperture pattern 15 comprises four tracks 16 - 19 of equal length arranged with a first track 16 above a second track 17 which again is arranged above a third track 18 above a fourth track 19 using the orientation og fig. 2b. All tracks are parallel to each other. The second track 17 and the third track 18 is defined as a first track pair 20a and the first track 16 and the fourth track 19 is defined as a second track pair 20b. Each track consists of alternating bright fields 7a, 7b and dark fields 8a, 8b. The bright fields 7a and dark fields 8a of the first track pair 20a are all of equal size and similarly all bright fields 7b and dark fields 8b of the second track pair 20b are of equal size. The bright fields 7b and dark fields 8b of the second track pair 20b are smaller than the bright fields 7a and dark fields 8a of the first track pair 20a.

The background 9 of the aperture pattern is dark.

The first track 16 begins with a dark field 8b, the second track 17 begins with a bright field 7a, the third track 18 begins with a dark field 8a and the fourth track 19 begins with a bright field 7b.

The aperture pattern 15 further comprises a centre axis 21, dividing the encoder pattern into a first aperture section 22 and a second aperture section 23. In the present example the centre axis 21 serves as both a mirror axis and a translation axis so that the second section 23 is a mirror image of the first section 22, which is translated along the centre axis 21. The centre axis 21 is situated in the middle between the two tracks of the first track pair 20a and the first track pair 20a is also the centre track pair.

The four tracks 16 - 19 of the aperture pattern and the centre axis 21 can be extended optionally along, left and right of the pattern section shown here.

Each bright field 7a or dark field 8a of the second track 17, i.e. the track of the first section of the encoder pattern closest to the centre axis 21, is rectangular with a first long side 24a' opposite a second long side 24b' both extending perpendicular to the centre axis 21. The first and second long side are, at each their end closest to the centre axis 21, connected by a first short side 24c' and at the end furthest away from the centre axis 21 connected by a second short side 24d'. The first long side 24a' and second long side 24b' side are longer than the first short side 24c' and second short side 24d'. The dimensions of the bright fields 7a are equal to the dimensions of the dark fields 8a.

Each bright fields 7b or dark field 8b of the first track 16, i.e. the track of the aperture section furthest away from the centre axis 21, is rectangular with a first long side 25a' opposite a second long side 25b' both extending perpendicular to the centre axis 21. The first and second long side are, at each their end closest to the centre axis 21, connected by a first short side 25c' and at the end furthest away from the centre axis by a second short side 25d'. The first long side 25a' and second long side 25b' side are longer than the first short side 25c' and second short side 25d' . The dimensions of the bright fields 7b are equal to the dimensions of the dark fields 8b.

The dimensions of the bright fields 7a, 7b and dark fields 8a, 8b of the first track 16 and second track 17 of the aperture pattern 15 are designed so that one second short side 24d' of a bright field 7a in the second track 17 faces three first short sides 25c', more precisely it faces two first short sides 25c' of dark fields 8b and one first short side 25c' of a bright field 7b.

The second aperture section 23 containing the third track 18 and the fourth track 18 is a mirror image of the first aperture section 22 which is translated by the length of one short side 24d', 24d ", and for like parts like reference numerals are used. The definitions and numbering of the sides of the bright fields 7a, 7b and dark fields 8a, 8b are re-used with the only difference that they are marked with " i.e. the long sides of the fields of the third row 4 are 24a" and 24b", and the short sides are 24c " and 24d ", 24c " being the short side facing the centre axis 21. Similarly are the long sides of the bright fields 7b and dark fields 8b marked 25a " and 25b " and the short sides 25c" and 25d", 25d" being the short side facing away from the centre axis 21.

The bright fields 7a and dark fields 8a of the first track pair 20a are arranged in a periodic pattern with a period $P_a$. The period $P_a$ is two times the length of the first short side 24c', 24c " and second short side 24d', 24d''. The tracks and the track pair with the period $P_a$ is the base-track/base-track pair.

The bright fields 7b and dark fields 8b of the second track pair 20b are arranged in a periodic pattern with a period $P_b$. The period $P_b$ of the second track pair 20b is 1/3 of the period $P_a$ of the first track pair 20a.

The second section 23 of the aperture pattern is translated along the centre axis 21 by half a period of the periodic pattern of the first track pair 20a, i.e. $P_a/2$ with respect to the first section 22 of the aperture pattern. Thus each first short side 24c' of the bright fields 7a and dark fields 8a of the second track 17 is opposite a first short side 24c" of a field of the opposite colour in the third track 18.

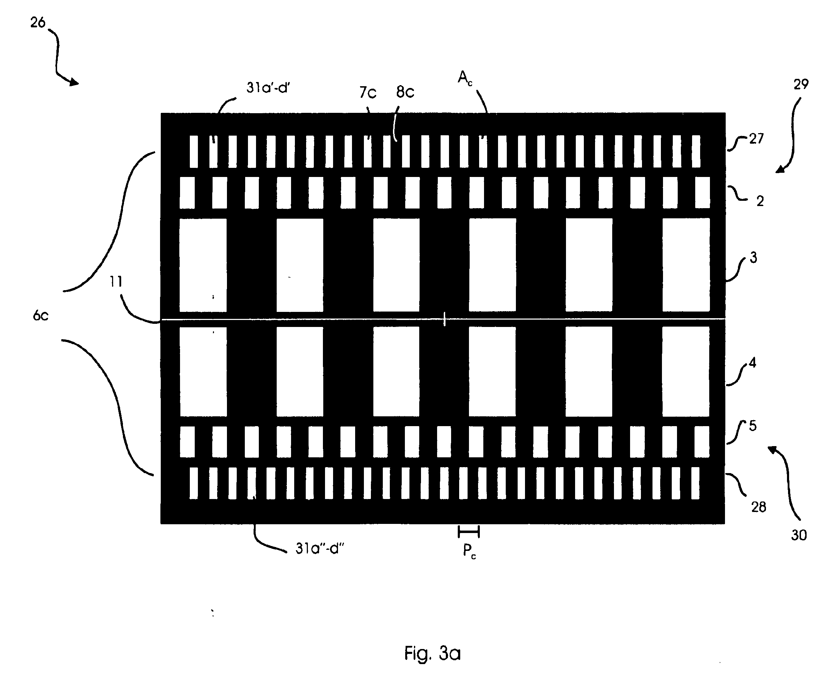

Fig. 3a is an encoder pattern 26 corresponding to the encoder pattern shown in fig. 2a with the additional feature that a third track pair 6c of bright fields 7c and dark fields 8c has been added. The third track pair 6c consists of a top track 27 located above the first track 2 and a bottom track 28 located below the fourth track 5. The period $P_c$ of the periodic pattern of the third track pair 6c is five times the period $P_a$ of the periodic pattern of the first track pair 6a.

The encoder pattern 26 also comprises a centre axis 10 dividing the pattern into a first encoder section 29 and a second encoder section 30.

Each bright field 7c or dark field 8c of the top track 27, i.e. the track of the first encoder section 29 furthest away from the centre axis 10, is rectangular with a first long side 31a' opposite a second long side 31b' both extending perpendicular to the centre axis 10. The first and second long side are, at each their end closest to the centre axis 10, connected by a first short side 31c' and at the end furthest away from the centre axis 10 connected by a second short side 31d'. The first long side 31a' and second long side 31b' side are longer than the first short side 31c' and second short side 31d', respectively. The dimensions of the bright fields 7c are equal to the dimensions of the dark fields 8c.

Each bright field 7c or dark field 8c of the bottom track 28, i.e. the track of the second encoder section 30 furthest away from the centre axis 10, is rectangular with a first long side 31a " opposite a second long side 31b" both extending perpendicular to the centre axis 10. The first and second long side are, at each their end closest to the centre axis 10, connected by a first short side 31c " and at the end furthest away from the centre axis 10 connected by a second short side 31d". The first long side 31a" and second long side 31b" side are longer than the first short side 31c " and second short side 31d " . The dimensions of the bright fields 7c are equal to the dimensions of the dark fields 8c.

The top track 27 and the bottom track 28 both start with a dark field 8c.

The present invention allows for the addition of as many extra track pairs to the encoder and aperture patterns, as needed to acquire a desired precision of the encoder in which they are implemented.

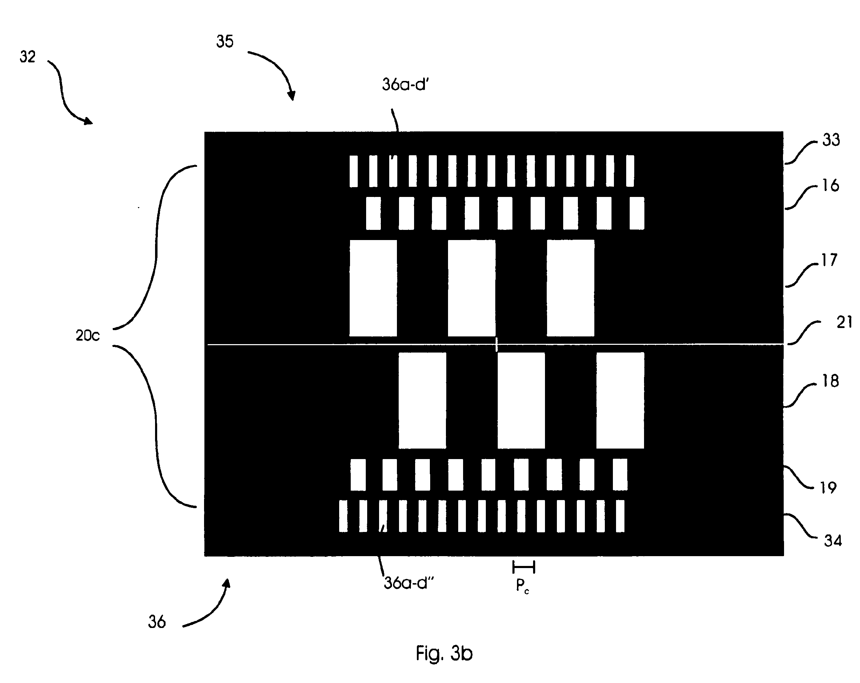

Fig. 3b is an aperture pattern 32, which is the aperture pattern of fig. 2b with the additional feature that a third track pair 20c of bright fields 7c and dark fields 8c has been added. The third track pair 20c consists of a top track 33 located above the first track 16 and a bottom track 34 located below the fourth track 19. The period $P_c$ of the periodic pattern of the third track pair 20c is 1/5 of the period $P_a$ of the periodic pattern of the first track pair 20a.

The aperture pattern 32 also comprises a centre axis 21 dividing the aperture pattern into a first aperture section 35 and a second aperture section 36.

Each bright field 7c or dark field 8c of the top track 33, i.e. the track of the first section 35 of the encoder pattern furthest away from the centre axis 21, is rectangular with a first long side 37a' opposite a second long side 37b' both extending perpendicular to the centre axis 21. The first and second long side are, at each their end closest to the centre axis 21, connected by a first short side 37c' and at the end furthest away from the centre axis 21 by a second short side 37d'. The first 37a' and second 37b' side are longer than the third 37c' and fourth 37d' side. The dimensions of the bright fields 7c are equal to the dimensions of the dark fields 8c.

Each bright field 7c or dark field 8c of the bottom track 34, i.e. the track of the second section 36 of the aperture pattern 32 furthest away from the centre axis 21, is rectangular with a first long side 37a " opposite a second long side 37b " both extending perpendicular to the centre axis 21. The first and second long side are, at each their end closest to the centre axis 21, connected by a first short side 37c" and at the end furthest away from the centre axis 21 by a second short side 37d " . The first 37a" and second 37b" side are longer than the third 37c " and fourth 37d " side. The dimensions of the bright fields 7c are equal to the dimensions of the dark fields 8c.

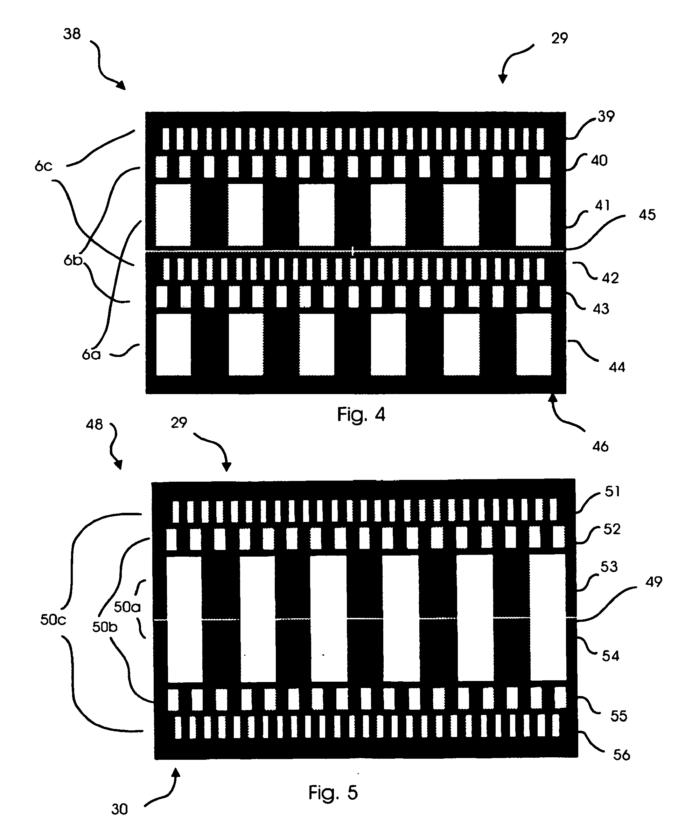

Fig. 4 is an exemplary non-symmetric encoder pattern 38 based on the encoder pattern shown in fig. 3a and for like parts like reference numerals are used.

The pattern comprises six parallel tracks 39 - 44 of bright fields 7a, 7b, 7c and dark fields 8a, 8b, 8c, with a first track 39 above a second track 40 above a third track 41 above a fourth track 42 above a fifth track 43 above a sixth track 44. The third 41 and sixth 44 track being alike forming a first track pair 6a, the second track 40 and fifth track 43 being alike forming a second track pair 6b and the first 39 and fourth 42 track being alike forming a third track pair 6c.

The centre axis 45 divides the encoder pattern into a first section 29 and a second section 46. The first section 29 and second section 46 of the encoder pattern 38 being alike and identical to the first section 29 of the encoder pattern 26 in fig. 3a.

Fig. 5 is another exemplary encoder pattern 48. The encoder pattern 48 is based on the encoder pattern 26 from fig. 3a and for like parts like reference numerals are used.

The first section 29 and the second section 30 are shifted towards the centre axis 49 so that the two tracks of the first track pair 6a in fig. 3a is merged into one centre track of double height. This centre track can be named the base track. The encoder pattern 48 thus comprises five parallel tracks arranged so that the first track 51 is above the second track 52 above the third track 53 above the fourth track 54 above the fifth track 55. The two tracks of the first track pair 6a known from encoder pattern 26 are merged into a single track 50a around which the second track pair 50b and third track pair 50c are arranged in a manner so that 50b is identical with 6b and 50c is identical with 6c.

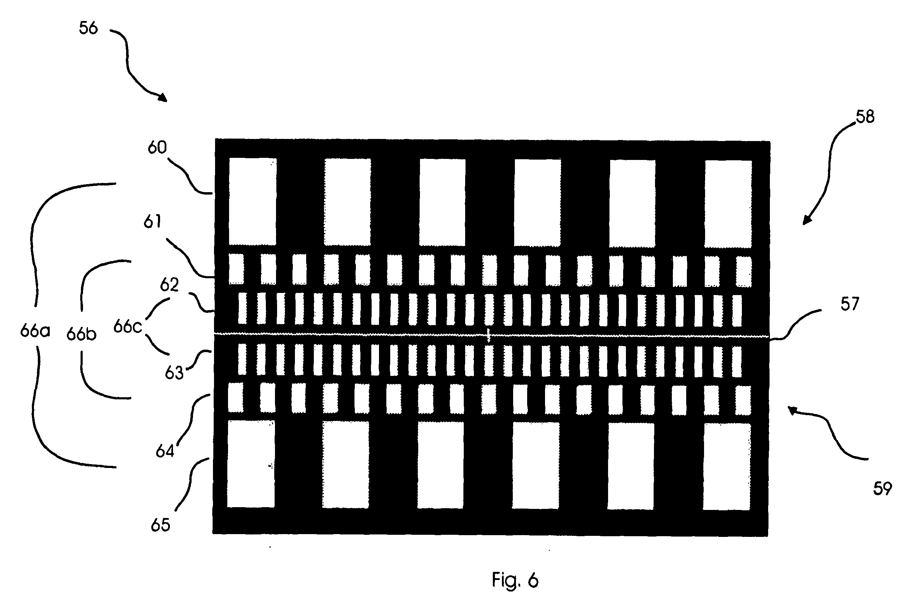

Fig. 6 is another exemplary encoder pattern 56. The encoder pattern 56 is based on the encoder pattern 26 from fig. 3a. It comprises a centre axis 57 dividing the pattern into a first section 58 and a second section 59. The first section 58 is identical to the second encoder section 30 of the encoder pattern 26 of fig. 3a, similarly the second section 59 is identical to the first encoder section 29 of the encoder pattern 26.

Thus the encoder pattern 56 comprises six parallel rows arranged on top of each other with a first row 60 above a second row 61 above a third row 62 above a fourth row 63 above a fifth row 64 above a sixth row 65. The six rows form three row pairs: the first row 60 and the sixth row 65 form a first row pair 66a, the second row 61 and the fifth row 64 form a second row pair 66b, and the third row 62 and the fourth row 63 form a third row pair 66c. The third track pair 66c being the centre track pair and the first track pair 66a being the base track pair having the base period $P_a$.

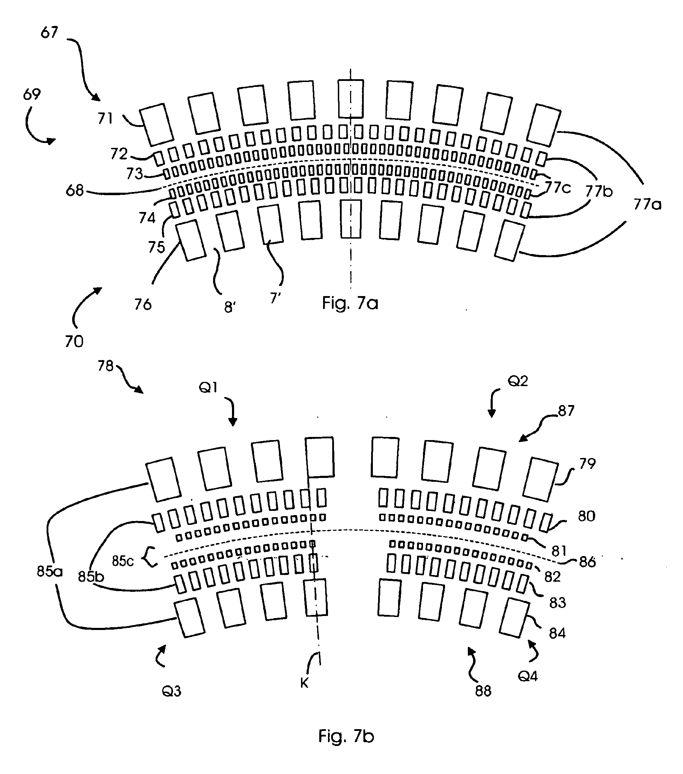

All of the figures 1 - 6 show only exemplary designs of the encoder and aperture patterns. Whereas they here are shown as white fields on a black background, the inverse patterns will be equally meaningful and so will any other design allowing for a sufficient contrast and providing a useful signal to noise level (S/N). Preferably the bright fields are see through glass and the dark fields are non transparent metallic, e.g. chrome. Fig. 7a is a section of a circular encoder pattern 67. Unlike the patterns in fig. 2 - 6 the fields known as bright fields 7 and dark fields 8 in the above-described patterns are here shown by outline only. The fields corresponding to bright fields 7 will be marked 7' and the field corresponding to dark fields 8 will be marked 8'. It is the linear encoder pattern 56 from fig. 6 which have been mapped on to a disk. The pattern is here illustrated as a circle section, but the pattern can preferably be extended to form a full circle.

"The centre axis" 10 in fig. 2a is in the present example a circle section 68 dividing the circular encoder pattern 67 into a first encoder section 69 and a second encoder section 70. The circular encoder pattern comprises six concentric circle sections of fields with a first track 71, around a second track 72 around a third track 73 around a fourth track 74 around a fifth track 75 around a sixth track 76. Similar to the pattern 56 the six tracks of the circular encoder pattern 67 form three track pairs: the first track 71 and the sixth track 76 form a first track pair 77a, the second track 72 and the fifth track 75 form a second track pair 77b, and the third track 73 and the fourth track 74 form a third track pair 77c. The third track pair 77c being the centre track pair and the first track pair 77a being the base-track pair having the base period $P_a$. The fields 7' and 8' of the encoder pattern are very slightly fan-shaped in a manner where the long sides of the fields 7' and 8' diverge away from each other in the direction away from the centre of the disc (not shown). This is due to the mapping of the linear pattern onto a circular disc and does not change the over all properties of the encoder pattern. The tracks of the encoder pattern has been corrected to ensure that the area of the fields 7' and 8' of the tracks pairs 77a, 77b, 77c are the same, i.e. the areas of the fields 7' and 8' in first track pair 77a are the same, the areas of the fields 7' and 8' in second track pair 77b are the same, and that the areas of the fields 7' and 8' in third track pair 77c are the same. This is ensured by regulation the length of the long sides of the fields 7' and 8', when constructing the pattern.

Fig. 7b is an aperture pattern 78, for implementation in an optical encoder together with the encoder pattern 67 in fig. 7a. It comprises six concentric tracks 79 - 84 arranged in three track pairs 85a, 85b, 85c, the third track pair 85c being the centre track pair and the first track pair 85a being the base-track pair having the base period $P_a$. Furthermore it comprises a "centre line" 86 dividing the aperture pattern 78 into a first aperture section 87 and a second aperture section 88. The three tracks 79, 90, 81 of the first aperture section 87 are not continuous but are divided into two halves, similarly the three tracks of the second aperture section 82 - 84 are split in two as well, and thus the aperture pattern 78 consists of four quadrants Q1 - Q4. Q1 in the first aperture section 87 being a mirror of Q2 which also is situated in the first aperture section 87. Q3 in the second aperture section 88 being a mirror of Q4 which also is situated in the second aperture section 88. Alternatively the tracks 79 - 84 are continuous and not disjoint as in the present exemplary aperture pattern. A line K has been added to the figure to help clarify the relative positions of the six tracks 79 -84. The shape of the fields and relation between the areas are as discussed above for fig. 7a i.e. the fields 7' and 8' are very slightly fan shaped and the lengths of the long sides of the fields has been regulated to ensure the right relationship between the areas of the fields 7' and 8' of the aperture pattern 78.

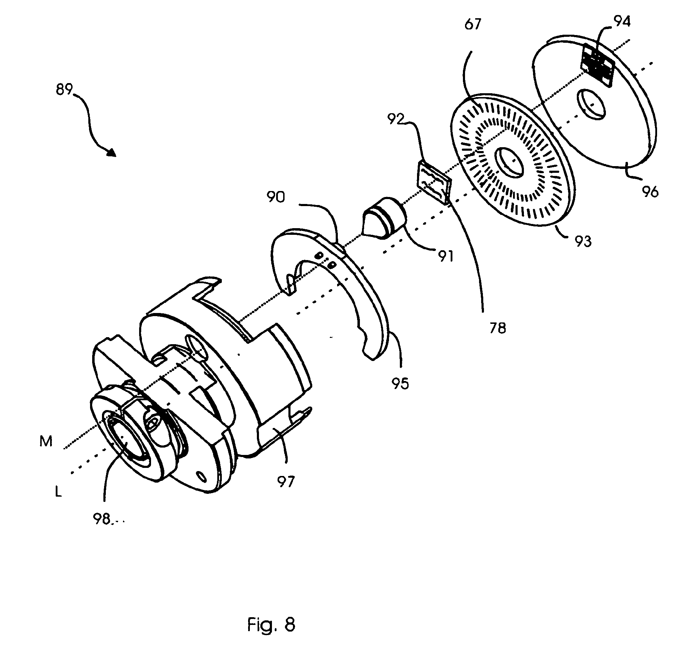

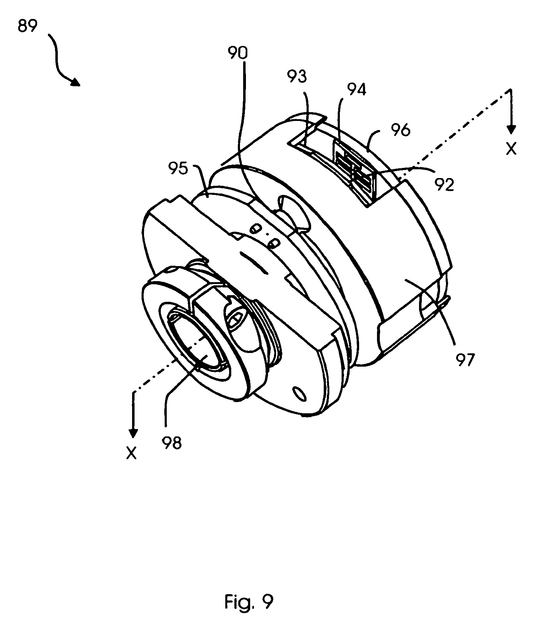

Fig. 8 shows an exploded view of an exemplary embodiment of an optical encoder 89, which is seen in assembled state in fig. 9. The optical encoder is in the present example a shaft encoder, but a shaft encoder is just one of the many possible encoder types the encoder and aperture patterns can be implemented in and therefore the configuration is only exemplary. The optical encoder 89 comprises a light source 90, a lens 91 for collimating the light from said light source and an object 92 with an aperture pattern 78. Furthermore it comprises a disc 93 with an encoder pattern 67 facing the aperture pattern 78 and an optical detector 94. The detector 94 and light source 90 are mounted on each their circuit board 95 and 96. All the parts of the encoder are mounted in a housing 97, which in the present case has a bore 98 centred along a centre axis L. The encoder pattern extends along the entire circumference of the disc but could within the scope of the present invention be used on only an angular section of the disc surface.

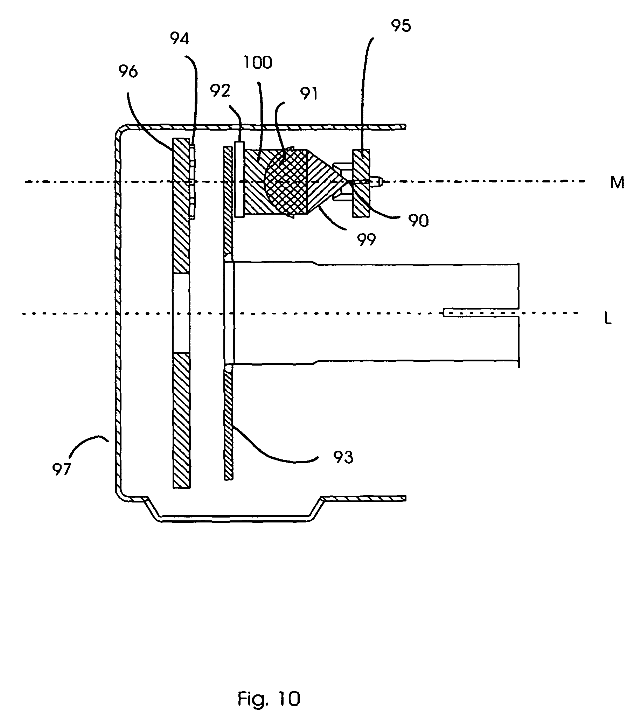

Fig. 10 is a sectional view of the encoder 89 taken along line X-X in fig 9. The light source 90 is here a diode but it can be replaced with any source emitting appropriate waves/photons. A lens 91 collimates the light 99. The collimated light 100 is first incident on an aperture pattern 78 and the light passed through the aperture pattern 78 is then incident on a circular encoder pattern 67. The light, which has passed through the encoder pattern 67, is then detected by an optical detector 94.

When operated the disc 93 is rotated with a speed corresponding to the rotation of a device to be monitored (not shown here) and thus the encoder pattern 67 is made to move relatively to the static aperture pattern 78. Hereby the light emitted from the light source 90 is manipulated to create multiple harmonic optic signals, which are detected by the optical detector 94. The light source 90, the lens 91, the aperture pattern 78, the encoder pattern 67 and the optical detector 94 are aligned along a through going alignment axis line M.

Even though only the circular patterns 67 and 78 are mentioned here, also the linear patterns can be applied to this type of encoder if they are transformed into circular patterns. The transformation from linear to circular or from circular to linear does not change the underlying principles of the encoder- and aperture pattern design. The transformation is performed by mapping, as described with reference to figs. 1a and fig. 1b.

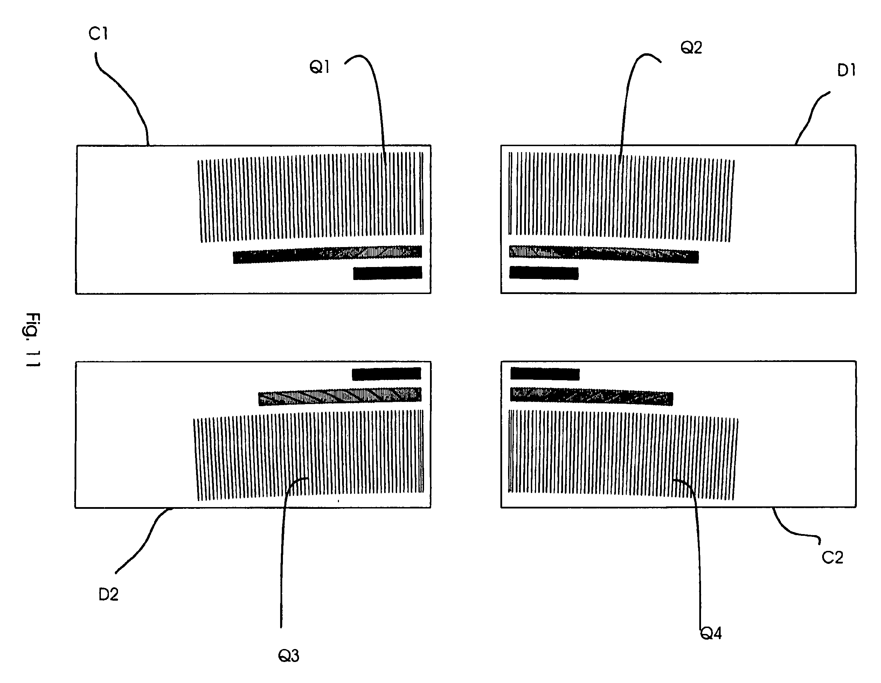

Fig. 11 shows the detector arrangement 94 as seen in figs. 8 - 10. The light signal passed through the aperture pattern 78 and encoder pattern 67, are detected by four separate detectors C1, C2, D1 and D2. Each detector C1, C2, D1, D2 detects the throughput from three tracks, i.e. they each detect an optic signal, which is the sum of three harmonic signals, one harmonic signal for each of said three tracks. C1 and D1 both detect the signal passed through first encoder section 69 and aperture section 87, and C2 and D2 both detect the signal passed through second encoder section 70 and aperture section 88. More precisely C1 detects the light which has passed through Q1 and the first encoder section 69, D1 detects the light which has passed through Q2 and the first encoder section 69, D2 detects the light which has passed through Q3 and the second encoder section 70 and C2 detects the light which has passed through Q4 and the second encoder section 70.

The signals from C1, C2, D1 and D2, also referred to as the signals C1, C2, D1 and D2, can be added or subtracted in different ways to obtain a desirable sinusoidal encoder output signal. In the present example the detectors and patterns are configured to have two sinusoidal encoder output signals $C_0 = C1-C2$ and $D_0 = D1-D2$, wherein $C_0$ is equal to $D_0$ phase shifted by 90°, so that the overall output from the encoder in the present example is optimally a sine curve and a cosine curve.

Even though the signals from C1, C2, D1 and D2 are subject to data processing, as in this example subtraction, the required data processing is simple and no time consuming or processor heavy calculations are needed due to the nature of the achieved signals. The signals from C1, C2, D1 and D2 can be processed by a "differential amplifier".

It is an advantage to have multiple signals C1, C2, D1, D2 as the possibilities for signal analysis hereby is greatly enhanced. Having multiple detectors, and being able of adding and subtracting the signals, provides ways of minimising the errors in the measurements, as several signals can be compared and/or corrected and also it provides a way of combining the harmonic signals from the tracks in advantageous ways in order to obtain the best possible sinusoidal encoder output signal.

Using the detector configuration here described is advantageous, but the detector can be exchanged by alternative detector configurations as long as the overall output from the optical encoder is sinusoidal and preferable a sine and/or a cosine shaped signal.

An encoder pattern and an aperture pattern are constructed as a pair intended for implementation together in an encoder. An example of this can be seen in figs. 2a and 2b where the encoder pattern 1 is designed to pair with the aperture pattern 15. The period $P_a$ of the first track pair 6a of the encoder pattern 1 is the same as the period $P_a$ of the first track pair 20a of the aperture pattern 15. Similarly the period $P_b$ of the second track pair 6b of the encoder pattern 1 is the same as the period $P_b$ of the second track pair 20b of the aperture pattern 15.

For all the encoder patterns 1, 26, 38, 48, 56 and 67 herein described a corresponding aperture pattern can be constructed as visualized by the exemplary encoder pattern and aperture pattern pairs in fig. 2a and 2b, fig. 3a and 3b and fig. 7a and 7b.

Optical encoder patterns can be either linear or circular for e.g. implementing in a shaft encoder. The here disclosed designs could be fitted on either with few trivial modifications.

Any of the here shown linear designs can be transferred to the surface of a disc or disc section. Similarly, the shown circular designs can be transferred to a linear design.

In all figures of the designs a centre axis 11, 21, 45, 49, 57, 68, 86 is visible, this however is not a requirement for the use of the patterns. The centre axis 11, 21, 45, 49, 57, 68, 86, when visible, is used to facilitate the precise alignment of the encoder and aperture pattern pair, but this alignment can optionally be achieved by other means.

The precision of the optical output signal from an encoder, for example of the type shown in figs. 8 - 10, can be modified by changing the encoder/aperture patterns. If the patterns only comprise a single track pair, the optical output signal will be an approximate triangular shaped periodic which sometimes, depending on the size of the bright fields 7 and dark fields 8 of the tracks, in practise, will be modified in manner where the "top" and "bottom" part of the curve is rounded giving a pseudo sine wave. When a second track pair is added, the output of the encoder becomes more sinuous or cosine like. The optical output signal from the encoder can be further improved, i.e. be closer to a sine or cosine, if needed by adding a third, fourth, fifth etc. track pair to the encoder and aperture pattern. When a track pair is added to the encoder pattern a corresponding track pair is added to the aperture pattern.

In broad terms the patterns can in general be said to have a first track pair with alternating bright fields 7a and dark fields 8a arranged periodically with a period $P_a$ and having an area $A_a$, a second track pair with alternating bright fields 7b and dark fields 8b arranged periodically with a period $P_b$ where $P_b = 1/3*P_a$ and an area $A_b$, a third track pair with alternating bright fields 7c and dark fields 8b arranged periodically with a period $P_c$ where $P_c = 1/5*P_a$ and an area $A_c$, a fourth track pair with alternating bright fields 7d and dark fields 8d arranged periodically with a period $P_d$ where $P_d = 1/7*P_a$ and area $A_d$ and so forth, i.e. the period of the n'th track pair is $1/(2n-1)*P_a$. The area of the fields decreases as n increases. The more track pairs, the smoother and more sine or cosine like the encoder output signal, the higher the precision. The tracks of the encoder pattern are aligned horizontally with respect to each other in a manner ensuring that the harmonic signal from each track has the right phase with respect to the other harmonic signals. The tracks of the aperture pattern are aligned horizontally with respect to each other and with respect to the encoder pattern tracks in a manner ensuring that the harmonic signal from each encoder track with its matching aperture track, has the right phase with respect to the other harmonic signals. The right phase meaning that the phase of each harmonic signal is the one, which comply with the mathematical equations given herein.

It is a very unique feature of the encoder patterns here described that they very simply can be modified to comply with increasing demands for higher precision.

The basic theoretical background for constructing all of the above presented patterns is that in general a periodic function f(x) with a period P can be expressed from a set of basis functions, for example triangular functions $ft_1(x)$, $ft_2(x)$... $ft_n(x)$, where $ft_1(x)$ has the same period P as f (x) while $ft_2(x)$ has half the period of P and $ft_n(x)$ has the period $1/n*P$. Each harmonic function is weighted by each their amplitude a, b, c etc. This can be expressed by:

$$f(x) = a*ft_1(x) + b*ft_2(x) + c*ft_3(x) + .... + \eta*ft_n(x) \qquad (1)$$

Where n is the number of harmonic functions and $\eta$ is the n'th amplitude.

If both sides of the equation (1) is multiplied by $ft_1(x)$ and then is integrated over the entire definition interval for f one gets:

$$\int ft_1(x) * f(x)dx = \int ft_1(x) * a * ft_1(x) + ft_1(x) * b * ft_2(x) + ft_1(x) * c * ft_3(x)dx$$

$$\Longleftrightarrow$$

$$\gamma_1 = a * f11 + b * f12 + c * f13$$

$$\int ft_2(x) * f(x)dx = \int ft_2(x) * a * ft_1(x) + ft_2(x) * b * ft_2(x) + ft_2(x) * c * ft_3(x)dx$$

$$\Longleftrightarrow$$

$$\gamma_2 = a * f12 + b * f22 + c * f23$$

$$\int ft_3(x) * f(x)dx = \int ft_3(x) * a * ft_1(x) + ft_3(x) * b * ft_2(x) + ft_3(x) * c * ft_3(x)dx$$

$$\Longleftrightarrow$$

$$\gamma_3 = a * f13 + b * f23 + c * f33$$

This can be formulated as a matrix problem

$$\begin{pmatrix} \gamma_1 \\ \gamma_2 \\ \gamma_3 \end{pmatrix} = \begin{bmatrix} f11 & f12 & f13 \\ f12 & f22 & f23 \\ f13 & f23 & f33 \end{bmatrix} \begin{pmatrix} a \\ b \\ c \end{pmatrix}$$

From here the amplitudes a, b, c...., $\eta$ can be found. More precisely the first five components can be found to be:

a=1.2330; b=0.0001; c=-0.1368; d=0.0001; e=-0.0488

This can by putting 1.2330 outside parenthesis be simplified to:

a=1.0000; b=0.0000; c=-0.1110; d=0.0000; e= -0.03968

These numbers can be approximated by the fractions 1/1, 1/9 and 1/25 respectively. Thus it will be possible to transform a triangular signal $F_1$ to a cosine shaped signal by subtracting a triangular shaped signal $F_3$ with three times the base frequency and weighted with 1/9 and subtracting a triangular shaped signal $F_5$ with five times the base frequency and weighted with 1/25.

Thus on the basis of the above-mentioned equations, encoder and aperture tracks can be constructed. The periods of the tracks in said encoder and aperture patterns is $P_1=1$, $P_2=1/3*P_1$, $P_3=1/5*P_1$, ... ,$P_n=1/(2n-1)*P_1$; and the amplitudes of the tracks in said encoder and aperture patterns are $A_1=1$, $A_2=1/9*A_1$, $A_3=1/25*A_1$ ,... ,$A_n=1/(2n-1)^2*A_1$.

**Example 1**

**Constructing a linear encoder pattern as seen in fig. 2a with matching aperture pattern as seen in fig. 2b, and fig. 3a with matching aperture pattern as seen in fig. 3b based on the simplified mathematical expressions $P_1=3*P_2$, $P_1=5*P_3$, $P_1= (2n-1)*P_n$ and $A_1=9*A_2$, $A_1=25*A$, $A_1=(2n-1)^2An$**

First the first track pair 6a is introduced in the encoder pattern, one track on each side of a centre axis 10. Each track comprises a number of alternating bright fields 7a and dark fields 8a. All bright fields 7a and dark fields 8a have the same dimensions and area $A_a$, are rectangular with the long sides 13a, 13b extending perpendicularly to the centre axis 10, and are arranged in a periodic manner with a period $P_a$. $P_a$, the longest period in the pattern, is named the base-period and the tracks and the track pair with the period $P_a$ is the base-track/base-track pair. The track with period $P_a$ is named the base-track. Each period contains one bright field 7a and one dark field 8a and thus equals two times the length of a short side 13c' and 13d'.

In a second step, the second track pair 6b is introduced, one track on each side of the centre axis 10. The period $P_b$ of the second track pair 6b is 1/3 of the period $P_a$ of the first track pair $P_a$ and the area $A_b$ of the bright fields 7b and dark fields 8b of the second track pair 6b are 1/9 of the area $A_a$ of the bright 7a fields and dark fields 8b of the first track pair 6a.

Adding an additional track pair 6c can create the encoder pattern from fig. 3a. This third track pair 6c is given by the equations $P_1=(2n-1)*P_n$ $A_1=(2n-1)^2 A_n$; where n=3 => $P_3=1/5*P_1$ and $A_3=1/25*A_1$.

Similarly the track pairs 20a, 20b and 20c are introduced to the aperture pattern.

In an exemplary encoder pattern the number of periods on a revolution of the disc is 2048 for the first track pair, 6144 for the second track pair and 10240 for the third track pair. In this example the encoder tracks are full circles on the disc.

Each encoder track 2, 3, 4, 5, 27, 28, with its matching aperture track 16, 17, 18, 19, 33, 34 will, when light is emitted on to it, give rise to a harmonic light signal when the encoder pattern is moved relatively to the aperture pattern. The amplitude of the harmonic signals are given by the area of the bright fields 7a - c and dark fields 8a -c, and the harmonic light signal will have its maximum when the bright field 7a-c of a track in the encoder pattern is located over a bright field 7a-c of a track in the aperture pattern. The phase of the harmonic signals relatively to each other is governed by the horizontal alignment of the tracks of the encoder pattern 1, 26, 28, 48, 56, 67 relatively to each other and also by the position of the matching aperture tracks. The harmonic signals are in the present example detected by the four detectors C1, C2, D1, D2 as illustrated in fig. 11.

Thus the detected signals are four harmonic sinusoidal signals, preferably sine and/or cosine shaped signals. The signals C1, C2, D1, D2 can be stored for processing or they can be processed directly by analogue or digital means to obtain the final at least one sinusoidal encoder output signal.

As the harmonic signals from the tracks in the first encoder/aperture section and second encoder/aperture section respectively are added together, the relative vertical position of the tracks, within each of the two sections, is not important. However it is an advantage if the encoder patterns are designed as simple as possible to maintain the overview of the pattern.

The fact that each harmonic signal is represented by its own encoder track and aperture track in the pattern is a huge advantage as the pattern is kept simple and it is easy to introduce additional tracks to enhance the smoothness of the sinusoidal curves and the approximation to a sine or cosine curve, i.e. to enhance the precision of the optical encoder. Furthermore it is possible to evaluate the contribution to the encoder output signal from each encoder track with its matching aperture track.

When the dimensions of each encoder track with its matching aperture track is given by a simple expression as shown above, it is possible to amend the encoder and aperture pattern without having to re-calculate and re-design the pattern as a whole.

If necessary the two output signals can be Fourier analysed to check how close the shape is to a sine or cosine shape respectively and it is possible to correct or make additions to the patterns based on said Fourier analysis.

To ensure that the resulting encoder output signal is as good as possible, i.e. is as close to a sine or cosine shape as possible, it is important that the tracks are constructed as precisely as possible and that they are positioned accurately with respect to each other. This is ensured by the presented design where each harmonic signal is represented by a separate encoder track and matching aperture track, as these simple patterns are easy to manufacture precisely even in very small scale and they can be aligned with great accuracy to ensure that the periods and the phases of the harmonics follow each other in exactly the desired way.

**Claims**

1.  An encoder (89) comprising an encoder pattern (1, 26, 38, 48, 56, 67) and an aperture pattern (15, 35, 78), where the encoder pattern (1, 26, 38, 48, 56, 67) is of the kind comprising at least two encoder tracks (2,3,4,5, 27, 28, 39, 40, 41, 42, 43, 44, 51, 52, 53, 54, 55, 56, 60, 61, 62, 63, 64, 65, 71, 72, 73, 74, 75, 76) of alternating optically distinguishable fields (7', 8', 7a, 7b, 7c, 8a, 8b, 8c), periodically arranged with a period $P_x$ and an area $A_x$ of the optically distinguishable fields (7', 8', 7a, 7b, 7c, 8a, 8b, 8c), said encoder pattern (1, 26, 38, 48, 56, 67), when implemented in the encoder (89) configured for measuring movement and/or speed and/or position of an object, is moved relatively to the aperture pattern (15, 35, 78) and gives rise to a varying encoder output signal, and where

- the encoder track with the longest period is defined as a base-track having a base-period $P_1$, and all other tracks have a period $P_2 ... P_n$,
- each of the at least two encoder tracks (2,3,4,5, 27, 28, 39, 40, 41, 42, 43, 44, 51, 52, 53, 54, 55, 56, 60, 61, 62, 63, 64, 65, 71, 72, 73, 74, 74, 76) of the encoder pattern (1, 26, 38, 48, 56, 67) has a corresponding aperture track (16, 17, 18, 19, 33, 34, 79, 80, 81, 82, 93,84),
- the period of an encoder track (2, 3, 4, 5, 27, 28, 39, 40, 41, 42, 43, 44, 51, 52, 53, 54, 55, 56, 60, 61, 62, 63, 64, 65, 71, 72, 73, 74, 75, 76) is the same as the period of a corresponding aperture track (16, 17, 18, 19, 3, 34, 79, 80, 81, 82, 83, 84),
- each of the at least two encoder tracks (2, 3, 4, 5, 27, 28, 39, 40, 41, 42, 43, 44, 51, 52, 53, 54, 55, 56, 60, 61, 62, 63, 64, 65, 71, 72, 73, 74, 75, 76) together with the corresponding aperture tracks (16, 17, 18, 3, 34, 79, 80, 81, 82, 83, 84) gives rise to a harmonic signal,
- the at least two harmonic signals can be combined to form at least one sinusoidal encoder output signal, where

$$P_2 = (1/3) * P_1, \quad P_3 = (1/5) * P_1, \quad ...., \quad P_n = (1/(2n-1)) * P_1,$$

**characterized in that** the areas $A_x$ of the alternating optically distinguishable fields (7', 8', 7a, 7b, 7c, 8a, 8b, 8c) are given by $A_2 = (1/9)*A_1$, $A_3 = (1/25)*A_1$,..., $A_n = (1/(2n-1)^2) *A_1$.

2. An encoder (89) according to claim 1, **characterized in that** the encoder output signal is a sine and/or cosine.

3. An encoder (89) according to any of the claims 1 or 2, **characterized in that**

   - the at least two tracks (2, 3, 4, 5, 27, 28, 39, 40, 41, 42, 43, 44, 51, 52, 53, 54, 55, 56, 60, 61, 62, 63, 64, 65, 71, 72, 73, 74, 75, 76) of the encoder pattern (1, 26, 38, 48, 56, 67) are arranged in pairs (6a, 6b, 6c, 50a, 50b, 50c, 66a, 66b, 66c, 77a, 77b, 77c), wherein the encoder tracks (2,3,4,5, 27, 28, 39, 40, 41, 42, 43, 44, 51, 52, 53, 54, 55, 56, 60, 61, 62, 63, 64, 65, 71, 72, 73, 74, 75, 76) have the same period,
   - the encoder pattern (1, 26, 38, 48, 56, 67) comprises n encoder track-pairs with periods $P_1.... P_n$ and area $A_1....A_n$ of the optically distinguishable fields (7', 8', 7a, 7b, 7, 8a, 8b, 8c).

4. An encoder (89) according to any of the preceding claims 1 - 3, **characterized in that** the aperture pattern (15, 35, 78) comprises a center aperture track-pair, the aperture pattern further comprises a center axis (10, 11, 45, 49, 57, 68) situated between the two tracks (17, 18, 81, 82) of the center track-pair (20a, 85c), defining a first aperture section (22, 29, 87) and an second aperture section (23, 30, 87) of the aperture pattern (15, 35, 78).

5. An encoder (89) according to claim 4, **characterized in that** the periods of the tracks of the second aperture section (23, 30, 87) are shifted by $P_1/2$ with respect to the first aperture section (22, 29, 87) of the aperture pattern.

6. An encoder (89) according to any of the preceding claims 1 - 5, **characterized in that** the encoder pattern (1, 26, 38, 48, 56, 67) is furthermore designed from a mathematical expression expressing a sine or cosine as a sum of harmonic functions where

   - the mathematical expression is

$$f(x) = a_1 * ft_1(x) \ + \ a_2 * ft_2(x) \ + \ a_3 * ft_3(x) \ + \ .... \ + \ a_n * ft_n(x);$$

   wherein $a_1$, $a_2$, ..., $a_n$ are the amplitudes, $ft_1$, $ft_2$, ..., $ft_n$ are triangle functions with periods $p_1$, $p_2$, ..., $p_n$, and n is the number of track-pairs in the encoder pattern (1, 26, 38, 48, 56, 67),
   or
   - the mathematical expression is

$$F = F_1 + F_3/9 - F_5/25 + F_7/49 - \ldots + (-1)^n (F_{2n-1}/(2n-1)^2);$$

wherein

$F_n$ is a harmonic function with the period $p_n$ and amplitude $1/(2n-1)^2 = a_n$.

7. An encoder (89) according to any of the preceding claims 1 - 6, **characterized in that** the encoder pattern (1, 26, 38, 48, 56, 67) and aperture pattern (15, 35, 78) are either linear, in which case the encoder tracks (2,3,4,5, 27, 28, 39, 40, 41, 42, 43, 44, 51, 52, 53, 54, 55, 56, 60, 61, 62, 63, 64, 65, 71, 72, 73, 74, 75, 76) and aperture tracks (16, 17, 18, 19, 3, 34, 79, 80, 81, 82, 83, 84) are parallel rows above each other, or are circular, in which case the encoder tracks (2,3,4,5, 27, 28, 39, 40, 41, 42, 43, 44, 51, 52, 53, 54, 55, 56, 60, 61, 62, 63, 64, 65, 71, 72, 73, 74, 75, 76) and aperture tracks (16, 17, 18, 19, 3, 34, 79, 80, 81, 82, 83, 84) are concentric circles or concentric sections of circles.

8. An encoder (89) according to any of the preceding claims 1 - 7, **characterized in that** the optically distinguishable elements (7', 8', 7a, 7b, 7c, 8a, 8b, 8c) are alternating opaque and transparent fields.

9. An encoder (89) according to any of the preceding claims 1 - 7, **characterized in that** the optically distinguishable elements (7', 8', 7a, 7b, 7c, 8a, 8b, 8c) are alternating solid material and through holes.

10. A method for designing an encoder pattern (1, 26, 38, 48, 56, 67) as defined in any of the claims 1 - 3 or 6 - 9, **characterized in that** the method comprises the steps of:

   a. providing a base encoder track (3, 4, 41, 44, 53, 54, 60, 65, 71, 76) or encoder track-pair (6a, 50a, 66a, 77a) with a period $P_1$ and an area $A_1$ of the optically distinguishable elements (7', 8', 7a, 7b, 7c, 8a, 8b, 8c),
   b. providing an additional n'th encoder track or encoder track-pair to the encoder pattern (1, 26, 38, 48, 56, 67), with period $P_2=(1/3)*P_1$, $P_3=(1/5)*P_1$,...,$P_n=(1/(2n-1))*P_1$, and
   c. optionally repeating step b,

   where areas $A_x$ of the alternating optically distinguishable elements (7', 8', 7a, 7b, 7c, 8a, 8b, 8c) are given by $A_2=(1/9)*A_1$, $A_3=(1/25)*A_1$,..., $A_n=(1/(2n-1)^2)*A_1$.

11. A method according to claim 10, **characterized in that** the encoder pattern (1, 26, 38, 48, 56, 67) is furthermore designed from a mathematical expression expressing a sine or cosine as a sum of harmonic functions, where the mathematical expression is

   - $f(x)=a_1*ft_1(x) + a_2*ft_2(x) + a_3*ft_3(x) + \ldots + a_n*ft_n(x)$; wherein $a_1, a_2, \ldots, a_n$ are the amplitudes, $ft_1, ft_2, \ldots, ft_n$ are triangle functions with periods $p_1, p_2, \ldots, p_n$, and n is the number of track-pairs in the encoder pattern (1, 26, 38, 48, 56, 67), or
   - $F = F_1 + F_3/9 - F_5/25 + F_7/49 - \ldots + (-1)^n(F_{2n-1}/(2n-1)^2)$; wherein $F_n$ is a harmonic function with the period $p_n$ and amplitude $1/(2n-1)^2 = a_n$.

12. A method according to claim 10 or 11, **characterized in that** the method comprises after any of the steps a - c analyzing the encoder output signal, preferably by means of Fourier analysis, and adjusting the area of the optically distinguishable elements (7', 8', 7a, 7b, 7c, 8a, 8b, 8c) based on the result of the Fourier analysis.

13. Use of the encoder according to any of the claim 1 - 9 as a monitor of movement or of position in any kind of machinery such as e.g. printers, photocopiers or gasoline pumps.

**Patentansprüche**

1. Ein Encoder (89) mit einem Encodiermuster (1, 26, 38, 48, 56, 67) und einem Aperturmuster (15, 35, 78), wobei das Encodermuster (1, 26, 38, 48, 56, 67) von der Art mit wenigstens zwei Encodierspuren (2, 3, 4, 5, 27, 28, 39, 40, 41, 42, 43, 44, 51, 52, 53, 54, 55, 56, 60, 61, 62, 63, 64, 65, 71, 73, 74, 75, 76) alternierend optisch unterscheidbarer Felder (7', 8', 7a, 7b, 7c, 8a, 8b, 8c), die periodisch mit einer Periode $P_x$ und einer Fläche $A_x$ der optisch unterscheidbaren Felder (7', 8', 7a, 7b, 7c, 8a, 8b, 8c) angeordnet sind, ist, wobei das Encodiermuster (1, 26, 38, 48, 56, 67) dann, wenn es in dem Encodierer (89) für eine Messung einer Bewegung und/oder Geschwindigkeit und/oder Position eines Objekts konfiguriert ist, relativ zu dem Aperturmuster (15, 35, 78) bewegt wird und zu einem variierenden Encoder Ausgangssignal führt, und wobei

- die Encodierspur mit der längsten Periode als eine Basisspur mit einer Basisperiode $P_1$ definiert wird und alle anderen Spuren eine Periode $P_2$ ... $P_n$ haben,
- jede der wenigstens zwei Encodierspuren (2, 3, 4, 5, 27, 28, 39,40, 41, 42, 43, 44, 51, 52, 53, 54, 55, 56, 60, 61, 62, 63, 64, 65, 71, 73, 74, 75, 76) des Encodiermusters (1, 26, 38, 48, 56, 67) eine entsprechende Aperturspur (16, 17, 18, 19, 33, 34, 79, 80, 81, 82, 93, 84) hat,
- die Periode einer Encodierspur (2, 3, 4, 5, 27, 28, 39,40, 41, 42, 43, 44, 51, 52, 53, 54, 55, 56, 60, 61, 62, 63, 64, 65, 71, 73, 74, 75, 76) dieselbe ist wie die entsprechende Aperturspur (16, 17, 18, 19, 33, 34, 79, 80, 81, 82, 93, 84),
- jede der wenigstens zwei Encodierspuren (2, 3, 4, 5, 27, 28, 39,40, 41, 42, 43, 44, 51, 52, 53, 54, 55, 56, 60, 61, 62, 63, 64, 65, 71, 73, 74, 75, 76) gemeinsam mit den entsprechenden Aperturspuren (16, 17, 18, 19, 33, 34, 79, 80, 81, 82, 93, 84) ein harmonisches Signal ergeben,
- die wenigstens mit zwei harmonischen Signalen zur Bildung eines sinusoidalen Encoderausgangssignals kombiniert werden können, wobei

$$P_2 = (1/3)*P_1, P_3 = (1/5)*P_1, ..., P_n = 1/(2n-1))*P_1,$$

**dadurch gekennzeichnet, dass** die Bereiche $A_x$ der alternierenden optisch unterscheidbaren Felder (7', 8', 7a, 7b, 7c, 8a, 8b, 8c) gegeben sind durch $A_2 = (1/9)*S_1, A_3 = (1/25)*A_1, ..., A_n = (1/(2n-1)^2)*A_1$.

2. Ein Encodierer (89) nach Anspruch (1, 26, 38, 48, 56, 67) **dadurch gekennzeichnet, dass** das Ausgangssignal des Encodierers ein Sinus und/oder ein Kosinus ist.

3. Ein Encodierer (89) nach einem der Ansprüche 1 oder 2, **dadurch gekennzeichnet, dass**

- die wenigstens zwei Spuren (2, 3, 4, 5, 27, 28, 39,40, 41, 42, 43, 44, 51, 52, 53, 54, 55, 56, 60, 61, 62, 63, 64, 65, 71, 73, 74, 75, 76) von den Encodiermustern (1, 26, 38, 48, 56, 67) in Paaren (6a, 6b, 6c, 501, 50b, 50c, 66a, 66c, 77a, 77b, 77c) angeordnet sind, wobei die Encodierspuren (2, 3, 4, 5, 27, 28, 39,40, 41, 42, 43, 44, 51, 52, 53, 54, 55, 56, 60, 61, 62, 63, 64, 65, 71, 73, 74, 75, 76) dieselbe Periode haben,
- die Encodiermuster (1, 26, 38, 48, 56, 67) n Encoder Spurpaare mit Perioden $P_1$... $P_n$ und Bereiche $A_1$...$A_n$ der optisch unterscheidbaren Felder (7', 8', 7a, 7b, 7c, 8a, 8b, 8c), aufweisen.

4. Ein Encoder (89) nach einem der vorangehenden Ansprüche 1 - 3, **dadurch gekennzeichnet, dass** das Aperturmuster (15, 35, 78) ein mittleres Aperturspurpaar aufweist, das Aperturmuster weiter eine Mittelachse (10, 11, 45, 49, 57, 68), die zwischen zwei Spuren (17, 18, 81, 82) des mittleren Spurpaares (20a, 85c) angeordnet ist, aufweisen, die einen ersten Aperturabschnitt (22, 29, 87) 29, 87) und einen zweiten Aperturabschnitt (23, 30, 87) des Aperturmusters (15, 35, 78) definieren.

5. Ein Encodierer (89) nach Anspruch 4, **dadurch gekennzeichnet, dass** die Perioden der Spuren des zweiten Aperturabschnitts (23, 30, 87) um $P_1/2$ bezüglich des ersten Aperturabschnitts (22, 29, 87) des Aperturmusters verschoben sind.

6. Ein Encodierer (89) nach einem der vorangehenden Ansprüche 1 - 5, **dadurch gekennzeichnet, dass** das Encodiermuster (1, 26, 38, 48, 56, 67) weiter von einem mathematischen Ausdruck gebildet wird, der einen Sinus oder Kosinus als eine Summe von harmonischen Funktionen ausdrückt, wobei

- der mathematische Ausdruck

$$f(x) = a_1*ft_1(x) + a_2*ft_2(x) + a_3*ft_2(x) + ... + a_n*ft_n(x)$$

ist;

wobei $a_1$, $a_2$, ..., $a_n$ Amplituden sind,
$ft_1$, $ft_2$, ..., $ft_n$ Dreiecksfunktionen mit Perioden $p_1$, $p_2$, ..., $p_n$ sind und n die Anzahl der Spurpaare in dem Encodiermuster (1, 26, 38, 48, 56, 67) ist,

oder

- der mathematische Ausdruck

$$F = F_1 + F_3/9 - F_5/25 + F_7/49 - \ldots + (-1)^n (F_{2n-1}//2n-1)^2)$$

ist, wobei $F_n$ eine harmonische Funktion mit der Periode $p_n$ und der Amplitude $1//2n-1)^2 = a_n$ ist.

7. Ein Encodierer (89) nach einem der vorangehenden Ansprüche 1 - 6, **dadurch gekennzeichnet, dass** das Encodiermuster (1, 26, 38, 48, 56, 67) und das Aperturmuster (15, 35, 78) entweder linear sind, in welchem Fall die Encoderspuren (2, 3, 4, 5, 27, 28, 39,40, 41, 42, 43, 44, 51, 52, 53, 54, 55, 56, 60, 61, 62, 63, 64, 65, 71, 73, 74, 75, 76) und die Aperturspuren (16, 17, 18, 19, 33, 34, 79, 80, 81, 82, 93, 84) zwei parallele übereinander angeordnete Reihen sind, oder aber kreisförmig sind, in welchem Fall die Encoderspuren (2, 3, 4, 5, 27, 28, 39,40, 41, 42, 43, 44, 51, 52, 53, 54, 55, 56, 60, 61, 62, 63, 64, 65, 71, 73, 74, 75, 76) und die Aperturspuren (16, 17, 18, 19, 33, 34, 79, 80, 81, 82, 93, 84) konzentrische Kreise oder konzentrische Sektionen von Kreisen sind.

8. Ein Encoder (89) nach einem der vorangehenden Ansprüche 1 - 7, **dadurch gekennzeichnet, dass** die optisch unterscheidbaren Elemente (7', 8', 7a, 7b, 7c, 8a, 8b, 8c), alternierend durchscheinende oder durchsichtige Felder sind.

9. Ein Encodierer (89) nach einem der vorangehenden Ansprüche 1 - 7, **dadurch gekennzeichnet, dass** die optisch unterscheidbaren Elemente (7', 8', 7a, 7b, 7c, 8a, 8b, 8c), alternierend festes Material oder Durchbohrungen sind.

10. Ein Verfahren zum Ausbilden eines Encodiermusters (1, 26, 38, 48, 56, 67) wie dies in einem der Ansprüche 1 - 3 oder 6 - 9 definiert ist, **dadurch gekennzeichnet, dass** das Verfahren die folgenden Schritte aufweist:

a) Schaffen einer Basisencodierspur (3, 4, 41, 44, 53, 54, 60, 65, 71, 76) oder eines Encodierspurpaares (6a, 50a, 66a, 77a) mit einer Periode $P_1$ und einem Bereich $A_1$ der optisch unterscheidbaren Elemente (7', 8', 7a, 7b, 7c, 8a, 8b, 8c),
b) Schaffen einer zusätzlichen n'ten Encoderspur oder eines Encoder Spurpaares zu dem Encodermuster (1, 26, 38, 48, 56, 67), mit einer Periode $P_2 = (1/3)*P_1$, $P_3 = (1/5)*P_1$, ..., $P_n = (1/(2n-1))*P_1$, und
c) optisches Wiederholen des Schrittes b,

wobei die Bereiche $A_x$ der alternierend optisch unterscheidbaren Elemente (7', 8', 7a, 7b, 7c, 8a, 8b, 8c) gegeben sind durch ($A_2 = (1/9)*A_1$, $A_3 = (1/25)*A_1$..., $A_n = (1/(2n_{-1})^2)*A_1$.

11. Ein Verfahren nach Anspruch 10, **dadurch gekennzeichnet, dass** das Encodiermuster (1, 26, 38, 48, 56, 67) weiter gebildet ist aus einem mathematischen Ausdruck der einen Sinus oder Kosinus als eine Summe von harmonischen Funktionen ausdrückt, wobei der mathematische Ausdruck

$$f(x) = a_1*ft_1(x) + a_2*ft_2(x) + a_3*ft_2(x) + \ldots + a_n*ft_n(x)$$

ist;
wobei $a_1$, $a_2$, ..., $a_n$ Amplituden sind,
$ft_1$, $ft_2$, ..., $ft_n$ Dreiecksfunktionen mit Perioden $p_1$, $p_2$, ..., $p_n$ sind und n die Anzahl der Spurpaare in dem Encodiermuster (1, 26, 38, 48, 56, 67) ist,
oder

- der mathematische Ausdruck

$$F = F_1 + F_3/9 - F_5/25 + F_7/49 - \ldots + (-1)^n(F_{2n-1}//2n-1)^2)$$

ist, wobei $F_n$ eine harmonische Funktion mit der Periode $p_n$ und der Amplitude $1//2n-1)^2$ = an ist.

**12.** Ein Verfahren nach Anspruch 10 oder 11, 26, 38, 48, 56, 67) **dadurch gekennzeichnet, dass** das Verfahren nach einem der Schritte a - c das Analysieren des Ausgangssignals des Encoders aufweist, vorzugsweise mittels einer Fourieranalyse, und Bestimmen des Bereichs jedes optisch unterscheidbaren Elements (7', 8', 7a, 7b, 7c, 8a, 8b, 8c), basierend auf dem Ergebnis der Fourieranalyse.

**13.** Verwendung eines Encoders nach einem der Ansprüche 1 - 9 als ein Monitor der Bewegung oder der Position jeder Art einer Maschine, wie beispielsweise Druckern, Fotokopierern oder Kraftstoffpumpen.

**Revendications**

**1.** Codeur (89) comprenant un motif de codeur (1, 26, 38, 48, 56, 67) et un motif d'ouverture (15, 35, 78), dans lequel le motif de codeur (1, 26, 38, 48, 56, 67) est du genre qui comprend au moins deux pistes de codeur (2, 3, 4, 5, 27, 28, 39, 40, 41, 42, 43, 44, 51, 52, 53, 54, 55, 56, 60, 61, 62, 63, 64, 65, 71, 72, 73, 74, 75, 76) de zones alternées pouvant être distinguées optiquement (7', 8', 7a, 7b, 7c, 8a, 8b, 8c), agencées de façon périodique avec une période $P_x$ et une surface $A_x$ de zones pouvant être distinguées optiquement (7', 8', 7a, 7b, 7c, 8a, 8b, 8c), ledit motif de codeur (1, 26, 38, 48, 56, 67), une fois mis en application dans le codeur (89) configuré pour mesurer un déplacement et/ou une vitesse et/ou une position d'un objet, est déplacé par rapport au motif d'ouverture (15, 35, 78) et donne lieu à un signal de sortie de codeur variable, et dans lequel :

- la piste de codeur qui présente la période la plus longue est définie comme une piste de base présentant une période de base $P_1$, et toutes autres pistes présentent une période $P_2 \ldots P_n$ ;
- chacune des deux pistes de codeur au moins (2, 3, 4, 5, 27, 28, 39, 40, 41, 42, 43, 44, 51, 52, 53, 54, 55, 56, 60, 61, 62, 63, 64, 65, 71, 72, 73, 74, 75, 76) du motif de codeur (1, 26, 38, 48, 56, 67) présente une piste d'ouverture correspondante (16, 17, 18, 19, 33, 34, 79, 80, 81, 82, 83, 84) ;
- la période d'une piste de codeur (2, 3, 4, 5, 27, 28, 39, 40, 41, 42, 43, 44, 51, 52, 53, 54, 55, 56, 60, 61, 62, 63, 64, 65, 71, 72, 73, 74, 75, 76) est identique à la période d'une piste d'ouverture correspondante (16, 17, 18, 19, 33, 34, 79, 80, 81, 82, 83, 84) ;
- chacune des deux pistes de codeur au moins (2, 3, 4, 5, 27, 28, 39, 40, 41, 42, 43, 44, 51, 52, 53, 54, 55, 56, 60, 61, 62, 63, 64, 65, 71, 72, 73, 74, 75, 76) ainsi que les pistes d'ouverture correspondantes (16, 17, 18, 33, 34, 79, 80, 81, 82, 83, 84) donnent lieu à un signal harmonique ;
- les deux signaux harmoniques au moins peuvent être combinés afin de former au moins un signal de sortie de codeur sinusoïdal ;

dans lequel :

$P_2 = (1/3) * P_1$, $P_3 = (1/5) * P_1$, ... , $P_n = (1/(2n-1)) * P_1$, **caractérisé en ce que** les surfaces $A_x$ de zones alternées pouvant être distinguées optiquement (7', 8', 7a, 7b, 7c, 8a, 8b, 8c) sont données par $A_2 = (1/9) * A_1$, $A_3 = (1/25) * A_1$, ... , $A_n = (1/(2n-1)^2) * A_1$.

**2.** Codeur (89) selon la revendication 1, **caractérisé en ce que** le signal de sortie du codeur est un sinus et/ou un cosinus.

**3.** Codeur (89) selon l'une quelconque des revendications 1 ou 2, **caractérisé en ce que** :

- les deux pistes au moins (2, 3, 4, 5, 27, 28, 39, 40, 41, 42, 43, 44, 51, 52, 53, 54, 55, 56, 60, 61, 62, 63, 64, 65, 71, 72, 73, 74, 75, 76) du motif de codeur (1, 26, 38, 48, 56, 67) sont agencées par paires (6a, 6b, 6c, 50a, 50b, 50c, 66a, 66b, 66c, 77a, 77b, 77c), dans lequel les pistes de codeur (2, 3, 4, 5, 27, 28, 39, 40, 41, 42, 43, 44, 51, 52, 53, 54, 55, 56, 60, 61, 62, 63, 64, 65, 71, 72, 73, 74, 75, 76) présentent la même période ;
- le motif de codeur (1, 26, 38, 48, 56, 67) comprend n paires de pistes de codeur qui présentent des périodes $P_1 \ldots P_n$, et une surface $A_1 \ldots A_n$ de zones pouvant être distinguées optiquement (7', 8', 7a, 7b, 7, 8a, 8b, 8c).

**4.** Codeur (89) selon l'une quelconque des revendications 1 à 3, **caractérisé en ce que** le motif d'ouverture (15, 35, 78) comprend une paire de pistes d'ouverture centrale, le motif d'ouverture comprend en outre un axe central (10, 11, 45, 49, 57, 68) situé entre les deux pistes (17, 18, 81, 82) de la paire de pistes centrale (20a, 85c), définissant une première section d'ouverture (22, 29, 87) et une seconde section d'ouverture (23, 30, 87) du motif d'ouverture (15, 35, 78).

**5.** Codeur (89) selon la revendication 4, **caractérisé en ce que** les périodes des pistes de la seconde section d'ouverture (23, 30, 87) sont décalées de $P_1/2$ par rapport à celles de la première section d'ouverture (22, 29, 87) du motif d'ouverture.

**6.** Codeur (89) selon l'une quelconque des revendications précédentes 1-5, **caractérisé en ce que** le motif de codeur (1, 26, 38, 48, 56, 67) est en outre conçu à partir d'une expression mathématique qui exprime un sinus ou un cosinus en tant que somme de fonctions harmoniques, dans lequel :

- l'expression mathématique est :

$$f(x) = a_1 * ft_1(x) + a_2 * ft_2(x) + a_3 * ft_3(x) + \ldots + a_n * ft_n(x) \; ;$$

dans laquelle $a_1$, $a_2$, ... , $a_n$ représentent les amplitudes ;
$ft_1$, $ft_2$, ... , $ft_n$ représentent des fonctions triangle présentant des périodes $p_1$, $p_2$, ...,$p_n$ ;
et n représente le nombre de paires de pistes dans le motif de codeur (1, 26, 38, 48, 56, 67) ;
ou
- l'expression mathématique est :

$$F = F_1 + F_3/9 - F_5/25 + F_7/49 - \ldots + (-1)^n \, (F_{2n-1}/(2n-1)^2) \; ;$$

dans laquelle :
$F_n$ est une fonction harmonique présentant la période $p_n$ et l'amplitude $1/(2n-1)^2 = a_n$.

**7.** Codeur (89) selon l'une quelconque des revendications précédentes 1-6, **caractérisé en ce que** le motif de codeur (1, 26, 38, 48, 56, 67) et le motif d'ouverture (15, 35, 78) sont soit linéaires, auquel cas les pistes de codeur (2, 3, 4, 5, 27, 28, 39, 40, 41, 42, 43, 44, 51, 52, 53, 54, 55, 56, 60, 61, 62, 63, 64, 65, 71, 72, 73, 74, 75, 76) et les pistes d'ouverture (16, 17, 18, 19, 33, 34, 79, 80, 81, 82, 83, 84) sont des rangées parallèles situées l'une au-dessus de l'autre, soit circulaires, auquel cas les pistes de codeur (2, 3, 4, 5, 27, 28, 39, 40, 41, 42, 43, 44, 51, 52, 53, 54, 55, 56, 60, 61, 62, 63, 64, 65, 71, 72, 73, 74, 75, 76) et les pistes d'ouverture (16, 17, 18, 19, 33, 34, 79, 80, 81, 82, 83, 84) sont des cercles concentriques ou des sections concentriques de cercles.

**8.** Codeur (89) selon l'une quelconque des revendications précédentes 1-7, **caractérisé en ce que** les éléments pouvant être distingués optiquement (7', 8', 7a, 7b, 7c, 8a, 8b, 8c) sont des zones alternées opaques et transparentes.

**9.** Codeur (89) selon l'une quelconque des revendications précédentes 1-7, **caractérisé en ce que** les éléments pouvant être distingués optiquement (7', 8', 7a, 7b, 7c, 8a, 8b, 8c) sont des zones de matériau plein et des trous traversants alternés.

**10.** Procédé de conception d'un motif de codeur (1, 26, 38, 48, 56, 67) selon l'une quelconque des revendications 1-3 ou 6-9, **caractérisé en ce que** le procédé comprend les étapes consistant à :

a. fournir une piste de codeur de base (3, 4, 41, 44, 53, 54, 60, 65, 71, 76) ou une paire de pistes de codeur (6a, 50a, 66a, 77a) présentant une période $P_1$ et une surface $A_1$ d'éléments pouvant être distingués optiquement (7', 8', 7a, 7b, 7c, 8a, 8b, 8c) ;
b. fournir une n$^{\text{ième}}$ piste de codeur ou paire de pistes de codeur supplémentaire au motif de codeur (1, 26, 38, 48, 56, 67) présentant une période $P_2 = (1/3) * P_1$, $P_3 = (1/5) * P_1$, ... , $P_n = (1/(2n-1)) * P_1$ ; et
c. répéter éventuellement l'étape b ;

dans lequel les surfaces $A_x$ des éléments alternés pouvant être distingués optiquement (7', 8', 7a, 7b, 7c, 8a, 8b, 8c) sont données par $A_2 = (1/9) * A_1$, $A_3 = (1/25) * A_1$, ... , $An = (1/(2n-1)^2) * A_1$.

**11.** Procédé selon la revendication 10, **caractérisé en ce que** le motif de codeur (1, 26, 38, 48, 56, 67) est en outre conçu à partir d'une expression mathématique qui exprime un sinus ou un cosinus en tant que somme de fonctions harmoniques, dans lequel l'expression mathématique est :

- $f(x) = a_1 * ft_1(x) + a_2 * ft_2(x) + a_3 * ft_3(x) + ... + a_n * ft_n(x)$ ;
dans laquelle $a_1$, $a_2$, ... , $a_n$ représentent les amplitudes ;
$ft_1$, $ft_2$, ... , $ft_n$ représentent des fonctions triangle présentant des périodes $p_1$, $p_2$, ... , $p_n$; et
$n$ représente le nombre de paires de pistes dans le motif de codeur (1, 26, 38, 48, 56, 67) ; ou
- $F = F_1 + F_3/9 - F_5/25 + F_7/49 - ... + (-1)^n (F_{2n-1}/(2n-1)^2)$ ;
dans laquelle $F_n$ est une fonction harmonique présentant la période $p_n$ et l'amplitude $1/(2n-1)^2 = a_n$.

**12.** Procédé selon la revendication 10 ou 11, **caractérisé en ce que** le procédé comprend, après n'importe laquelle des étapes a-c, les étapes consistant à analyser le signal de sortie du codeur, de préférence au moyen d'une analyse de Fourier, et à régler la surface des éléments pouvant être distingués optiquement (7', 8', 7a, 7b, 7c, 8a, 8b, 8c) sur la base du résultat de l'analyse de Fourier.

**13.** Utilisation du codeur selon l'une quelconque des revendications 1-9 en tant que dispositif de surveillance du déplacement ou de la position dans tout genre de machines telles que, par exemple, des imprimantes, des photocopieurs ou des pompes à essence.

Fig. 1a

Fig. 1b

Fig. 2a

Fig. 2b

EP 2 314 989 B1

EP 2 314 989 B1

Fig. 3a

23

Fig. 3b

Fig. 4

Fig. 5

Fig. 6

Fig. 7a

Fig. 7b

Fig. 8

89

90

93

94

96

95

92

97

98

X

X

Fig. 9

Fig. 10

Fig. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4795901 A
- US 20070120049 A
- US 5889280 A